# EUROPEAN PATENT APPLICATION

(11) **EP 3 023 462 A1**
(43) Date of publication of application: **25.05.2016**
(21) Application number: 14827038.2
(22) Date of filing: 11.07.2014
(51) Int. Cl.: C08L 101/10, C08K 5/16, C08K 5/54, C09D 183/00, C09J 183/00

(54) **PHOTOCURABLE COMPOSITION**

(30) Priority: 18.07.2013 JP 2013149915; 20.12.2013 JP 2013263358; 14.01.2014 JP 2014003975
(71) Applicant: Cemedine Co., Ltd., Tokyo 141-8620 (JP)
(72) Inventor: YAMAGA, Hiroshi, Tokyo 141-8620 (JP); OKAMURA, Naomi, Tokyo 141-8620 (JP); WATANABE, Yutaka, Tokyo 141-8620 (JP); ASAI, Ryosuke, Tokyo 141-8620 (JP); KOUNO, Shouma, Tokyo 141-8620 (JP); SAITO, Atsushi, Tokyo 141-8620 (JP)
(74) Representative: Peguet, Wilfried
(86) International application number: PCT/JP2014/068615
(87) International publication number: WO 2015/008709

(57) **Abstract**

A rapid-curing photocurable composition exerting excellent adhesion performance even with a low cumulative light quantity and being curable in a short time, thus ensuring excellent workability, is provided. A photocurable composition is made to includes:(A) a crosslinkable silicon group-containing organic polymer; (B) a photobase generator; and (C1) a silicon compound having an Si-F bond and/or (C2) one or more fluorine-based compounds selected from the group consisting of boron trifluoride, a boron trifluoride complex, a fluorinating agent, and an alkali metal salt of a polyfluoro compound. The (B) photobase generator is preferably a photolatent tertiary amine.

## Description

### Technical Field

The present invention relates to a photocurable composition. More specifically, the present invention relates to a photocurable composition ensuring rapid curing even with a low cumulative light quantity and being curable in a short time.

### Background Art

An organic polymer having a silicon-containing group which contains a hydroxyl group or hydrolyzable group bonded to a silicon atom and can be crosslinked by forming a siloxane bond (hereinafter, sometimes referred to as "crosslinkable silicon group") is known to have a property of being crosslinked by siloxane bond formation accompanied by a hydrolysis reaction or other reactions of the crosslinkable silicon group due to moisture, etc. even at room temperature and thereby providing a rubbery cured product. Among these polymers having a crosslinkable silicon group, an organic polymer with the main chain skeleton being a polyoxyalkylene-based polymer or a (meth)acrylic acid ester-based polymer is widely used in applications such as sealing material, adhesive and coating material.

A curable composition and a rubbery cured product obtained by curing, which are used for a sealing material, an adhesive, a coating material, etc., are required to satisfy various properties, for example, curability, adhesiveness, storage stability, and mechanical properties such as modulus, strength and elongation, and many studies have been heretofore made also on an organic polymer containing a crosslinkable silicon group. Recently, in various fields such as field of electronic component/electronic device assembling, rapid curability is required but in the case of a moisture-curable adhesive, there is a problem that the time available for bonding after application is short.

Meanwhile, as a photocrosslinkable composition using an organic polymer containing a crosslinkable silicon group, Patent Document 1 discloses a photocrosslinkable composition containing a polymer having two or more hydrolyzable silyl groups per molecule and a compound for crosslinking the polymer by light irradiation and sets forth, for example, a photocrosslinkable composition containing, as the compound for crosslinking the polymer by light irradiation, a compound capable of generating an acid or a base upon irradiation with light (Patent Document 1, claims 1 to 3).

However, the composition described in Patent Document 1 has a problem that a rust is generated when a photoacid generator is used as the compound for crosslinking the polymer by light irradiation. In addition, there is a problem that when a photobase generator is used as the compound for crosslinking the polymer by light irradiation, the efficiency is bad and the irradiation time or the time required for curing is long.

### Related Art Document

### Patent Document

Patent Document 1: JP-A-2001-172514

### Summary of the Invention

### Problems that the Invention is to Solve

An object of the present invention is to provide a rapid-curing photocurable composition exerting excellent adhesion performance even with a low cumulative light quantity and being curable in a short time, thus ensuring excellent workability.

### Means for Solving the Problems

In order to attain the object above, a photocurable composition of the present invention is characterized by including (A) a crosslinkable silicon group-containing organic compound, (B) a photobase generator, and (C1) a silicon compound having an Si-F bond and/or (C2) one or more fluorine-based compounds selected from the group consisting of boron trifluoride, a boron trifluoride complex, a fluorinating agent, and an alkali metal salt of a polyfluoro compound.

The (B) photobase generator is preferably a photolatent tertiary amine. Here, in the present invention, a substance capable of generating an amine compound by an action of an active energy ray is referred to as a photolatent amine compound. In addition, a substance capable of generating an amine compound having a primary amino group, a substance capable of generating an amine compound having a secondary amino group, and a substance capable of generating an amine compound having a tertiary amino group, by an action of an active energy ray, are referred to as a photolatent primary amine, a photolatent secondary amine, and a photolatent tertiary amine, respectively.

The photocurable composition of the present invention suitably further includes (D) a silane coupling agent.

The (A) crosslinkable silicon group-containing organic compound is preferably one or more members selected from the group consisting of a polyoxyalkylene-based polymer containing, on average, 0.8 or more crosslinkable silicon groups per molecule, a saturated hydrocarbon-based polymer containing, on average, 0.8 or more crosslinkable silicon groups per molecule, and a (meth)acrylic acid ester-based polymer containing, on average, 0.8 or more crosslinkable silicon groups per molecule.

A method for producing a cured product of the present invention includes irradiating a photocurable composition of the present invention with light to form a cured product.

A cured product of the present invention is a cured product formed by a production method of a cured product of the present invention.

A method for producing a product of the present invention includes producing the product by using ta photocurable composition of the present invention.

A first embodiment of the product of the present invention is a product produced by a method for producing a product of the present invention. A second embodiment of the product of the present invention is a product produced using a method for producing a cured product of the present invention. A third embodiment of the product of the present invention is a product using, as an adhesive, a photocurable composition of the present invention. A fourth embodiment of the product of the present invention is a product using, as a coating agent, a photocurable composition of the present invention.

### Advantages of the Invention

According to the present invention, a photocurable composition that is not cured at the time of no irradiation with an active energy ray and is cured when irradiated with an active energy ray, more specifically, a photocurable composition that exerts excellent adhesion performance even with a low cumulative light quantity, is curable in a short time and exhibits rapid curability while ensuring an appropriate time available for sticking together, can be provided. Depending on the irradiation conditions of an active energy ray, the photocurable composition of the present invention is not cured immediately after the irradiation with an active energy ray and can be cured after passing a fixed time, making post curing possible, and, for example, when the photocurable composition of the present invention is used as an adhesive, adhesion can also be effected after the adhesive is applied and left standing for a fixed time.

### Mode for Carrying Out the Invention

Embodiments of the present invention are described below, but the embodiments set forth herein are exemplary, and various modifications can of course be made without departing from the technical idea of the present invention.

The photocurable composition of the present invention includes (A) a crosslinkable silicon group-containing organic polymer, (B) a photobase generator, and (C1) a compound having an Si-F bond and/or (C2) one or more fluorine-based compounds selected from the group consisting of boron trifluoride, a boron trifluoride complex, a fluorinating agent, and an alkali metal salt of a polyfluoro compound.

The (A) crosslinkable silicon group-containing organic polymer is not particularly limited as long as it is an organic polymer having a crosslinkable silicon group, but an organic polymer not having a polysiloxane main chain but having various main chain skeletons except for polysiloxane is suitable, because a low molecular cyclic siloxane working out to a contact fault factor is not contained or not generated.

Specific examples include a polyoxyalkylene-based polymer such as polyoxyethylene, polyoxypropylene, polyoxybutylene, polyoxytetramethylene, a polyoxyethylene-polyoxypropylene copolymer and a polyoxypropylene-polyoxybutylene copolymer; a hydrocarbon-based polymer such as an ethylene-propylene-based copolymer, polyisobutylene, a copolymer of isobutylene and isoprene, etc., polychloroprene, polyisoprene, a copolymer of isoprene or butadiene with acrylonitrile and/or styrene, etc., polybutadiene, a copolymer of isoprene or butadiene with acrylonitrile, styrene, etc., and a hydrogenated polyolefin-based polymer obtained by hydrogenation of these polyolefin-based polymers; a polyester-based polymer obtained by condensation of a dibasic acid such as adipic acid and a glycol or by ring-opening polymerization of lactones; a (meth)acrylic acid ester-based polymer obtained by radical polymerization of a monomer such as ethyl (meth)acrylate and butyl (meth)acrylate; a vinyl-based polymer obtained by radical polymerization of a monomer such as (meth)acrylic acid ester-based monomer, vinyl acetate, acrylonitrile and styrene; a graft polymer obtained by polymerizing a vinyl monomer in the organic polymer above; a polysulfide-based polymer; a polyamide-based polymer such as nylon 6 produced by ring-opening polymerization of ε-caprolactam, nylon 6•6 produced by condensation polymerization of hexamethylenediamine and adipic acid, nylon 6•10 produced by condensation polymerization of hexamethylenediamine and sebacic acid, nylon 11 produced by condensation polymerization of ε-aminoundecanoic acid, nylon 12 produced by ring-opening polymerization of ε-aminolaurolactam, and a copolymer nylon having two or more components out of the nylons above; a polycarbonate-based polymer produced by, for example, condensation polymerization of bisphenol A and carbonyl chloride; and a diallyl phthalate-based polymer.

Of these, a saturated hydrocarbon-based polymer such as polyisobutylene, hydrogenated polyisoprene and hydrogenated polybutadiene, a polyoxyalkylene-based polymer, and a (meth)acrylic acid ester-based polymer are preferred, because the glass transition temperature is relatively low and a cured product obtained is excellent in cold resistance. In addition, a polyoxyalkylene-based polymer and a (meth)acrylic acid ester-based polymer are more preferred, because these polymers have high moisture permeability and when a one-liquid rype composition is formed, the deep curability is excellent.

The crosslinkable silicon group of the organic polymer (A) for use in the present invention may be a group having a hydroxyl group or hydrolyzable group bonded to a silicon atom and capable of being crosslinked by forming a siloxane bond. The crosslinkable silicon group is suitably, for example, a group represented by the following formula (1):

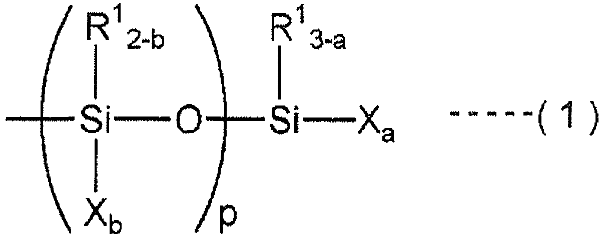

In formula (1), R¹ represents a hydrocarbon group having a carbon number of 1 to 20, an alkyl group having a carbon number of 1 to 20, a cycloalkyl group having a carbon number of 3 to 20, an aryl group having a carbon number of 6 to 20, an aralkyl group having a carbon number of 7 to 20, a triorganosiloxy group represented by R¹₃SiO- (wherein R¹ has the same meaning as above), or a hydrocarbon group having a carbon number of 1 to 20, in which at least one hydrogen atom on carbon atoms at 1- to 3-positions is substituted with a halogen, -OR⁴¹, -NR⁴²R⁴³, -N=R⁴⁴, -SR⁴⁵ (wherein each of R⁴¹, R⁴², R⁴³ and R⁴⁵ is a hydrogen atom or a substituted or unsubstituted hydrocarbon group having a carbon number of 1 to 20, and R⁴⁴ is a divalent substituted or unsubstituted hydrocarbon group having a carbon number of 1 to 20), a perfluoroalkyl group having a carbon number of 1 to 20, or a cyano group, and when two or more R¹ are present, these members may be the same or different; X represents a hydroxyl group or a hydrolyzable group, and when two or more X are present, they may be the same or different; a represents 0, 1, 2 or 3; b represents 0, 1 or 2; a number p of b in the following formula (2) need not be the same; and p represents an integer of 0 to 19; with the proviso of satisfying (a+(sum of b))≥1.

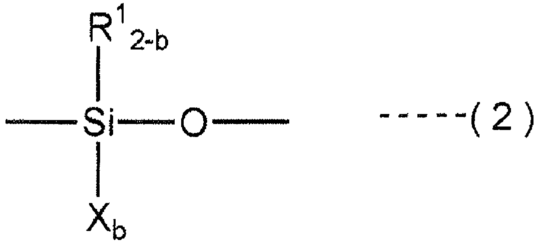

From 1 to 3 hydrolyzable groups or hydroxyl groups may be bonded to one silicon atom, and the range of (a+(sum of b)) is preferably from 1 to 5. In the case where two or more hydrolyzable groups or hydroxyl groups are bonded in the crosslinkable silicon group, these members may be the same or different. The number of silicon atoms forming the crosslinkable silicon group may be 1 or may be 2 or more, but in the case of silicon atoms connected through a siloxane bond, etc., the number of silicon atoms may be about 20.

In view of easy availability, the crosslinkable silicon group is preferably a crosslinkable silicon group represented by the following formula (3):

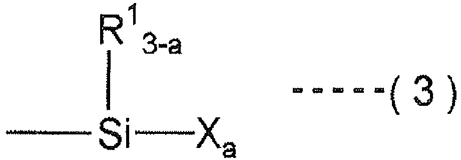

In formula (3), R¹ and X are the same as above, and a is an integer of 1, 2 or 3. In view of curability, a in formula (3) is preferably 2 or more, more preferably 3, so as to obtain a curable composition having a sufficient curing rate.

Specific examples of R¹ include an alkyl group such as methyl group and ethyl group, a cycloalkyl group such as cyclohexyl group, an aryl group such as phenyl group, an aralkyl group such as benzyl group, and a triorganosiloxy group represented by R¹₃SiO-. Among these, a methyl group is preferred.

The hydrolyzable group represented by X is not particularly limited and may be a conventionally known hydrolyzable group except for F atom. Specific examples thereof include a hydrogen atom, a halogen atom, an alkoxyl group, an acyloxy group, a ketoximate group, an amino group, an amide group, an acid amide group, an aminooxy group, a mercapto group, and an alkenyloxy group. Among these, a hydrogen atom, an alkoxyl group, an acyloxy group, a ketoximate group, an amino group, an amide group, an aminooxy group, a mercapto group and an alkenyloxy group are preferred, and an alkoxyl group, an amide group and an aminooxy group are more preferred. Above all, an alkoxyl group is preferred in view of its mild hydrolyzability and the ease of handling. Of alkoxyl groups, an alkoxyl group having a smaller carbon number is higher in the reactivity, and the reactivity becomes lower as the carbon number is larger, e.g., in order of methoxy group > ethoxy group > propoxy group. Although the alkoxyl group may be selected according to the purpose or usage, a methoxy group or an ethoxy group is usually used.

Specific structures of the crosslinkable silicon group include a trialkoxysilyl group [-Si(OR)₃] such as trimethoxysilyl group and triethoxysilyl group, and a dialkoxysilyl group [-SiR¹(OR)₂] such as methyldimethoxysilyl group and methyldiethoxysilyl group. A trialkoxysilyl group [-Si(OR)₃] is preferred because of its high reactivity, and a trimethoxysilyl group is more preferred. Here, R is an alkyl group such as methyl group or ethyl group.

As for the crosslinkable silicon group, one group may be used, or two or more groups may be used in combination. The crosslinkable silicon group may be present in the main chain or the side chain or in both.

The number of silicon atoms forming the crosslinkable silicon group is 1 or more, but in the case of silicon atoms connected through a siloxane bond, etc., the number of silicon atoms is preferably 20 or less.

The crosslinkable silicon group-containing organic polymer may have a linear or branched structure, and the number average molecular weight thereof is, in terms of polystyrene by GPC, approximately from 500 to 100,000, more preferably from 1,000 to 50,000, still more preferably from 3,000 to 30,000. If the number average molecular weight is less than 500, the cured product is likely to exhibit inadequate elongation properties, whereas if it exceeds 100,000, the viscosity becomes high and there is a disadvantageous tendency with respect to the workability.

In order to obtain a rubbery cured product exhibiting high strength, high elongation and low elastic modulus, the organic polymer preferably contains, on average, 0.8 or more, preferably 1.0 or more, more preferably from 1.1 to 5, crosslinkable silicon groups per molecule of the polymer. If the number of crosslinkable silicon groups contained in the molecule is less than 0.8 on average, the curability becomes insufficient, making it difficult to develop a good rubber-elastic behavior. The crosslinkable silicon group may be present at a main chain terminal, at a side chain terminal, or at both terminals, of the organic polymer molecular chain. In particular, when the crosslinkable silicon group is present only at a main chain terminal of the molecular chain, the effective network length of the organic polymer component contained in the finally formed cured product becomes long and therefore, a rubbery cured product exhibiting high strength, high elongation and low elastic modulus is likely to be obtained.

The above-described polyoxyalkylene-based polymer is essentially a polymer containing a repeating unit represented by the following formula (4):

-R²-O- (4)

In formula (4), R² is a linear or branched alkylene group having a carbon number of 1 to 14, and a linear or branched alkylene group having a carbon number of 1 to 14, particularly from 2 to 4, is preferred.

Specific examples of the repeating unit represented by formula (4) include: -CH₂O-, -CH₂CH₂O-, -CH₂CH(CH₃)O-, -CH₂CH(C₂H₅)O-, -CH₂C(CH₃)₂O-, and -CH₂CH₂CH₂CH₂O-. The main chain skeleton of the polyoxyalkylene polymer may be composed of only one kind of a repeating unit or may be composed of two or more kinds of repeating units.

The method for synthesizing the polyoxyalkylene-based polymer includes, for example, but is not limited to, a polymerization method using an alkali catalyst such as KOH, a polymerization method using an organic aluminum-porphyrin complex catalyst obtained by the reaction of an organic aluminum compound with porphyrin described, e.g., in JP-A-61-197631, JP-A-61-215622 and JP-A-61-215623, and a polymerization method using a double metal cyanide complex catalyst described, e.g., in JP-B-46-27250 and JP-B-59-15336. According to the polymerization method using an organic aluminum-porphyrin complex catalyst or the polymerization method using a double metal cyanide complex catalyst, a polyoxyalkylene-based polymer having a high molecular weight and a narrow molecular weight distribution, specifically, a number average molecular weight of 6,000 or more and Mw/Mn of 1.6 or less, can be obtained.

The main chain skeleton of the polyoxyalkylene-based polymer may contain other components such as urethane bond component. The urethane bond component includes, for example, those obtained by the reaction of an aromatic polyisocyanate such as toluene (tolylene) diisocyanate, diphenylmethane diisocyanate and xylylene diisocyanate, or an aliphatic polyisocyanate such as isophorone diisocyanate and hexamethylene diisocyanate, with a hydroxyl group-containing polyoxyalkylene-based polymer.

Introduction of the crosslinkable silicon group into the polyoxyalkylene-based polymer can be performed by reacting a polyoxyalkylene-based polymer having in the molecule thereof a functional group such as unsaturated group, hydroxyl group, epoxy group or isocyanate group, and a compound having a crosslinkable silicon group and a functional group reactive with the functional group above (hereinafter, referred to as a polymer reaction method).

Specific examples of the polymer reaction method include a method of allowing a hydrosilane having a crosslinkable silicon group or a mercapto compound having a crosslinkable silicon group to act on an unsaturated group-containing polyoxyalkylene-based polymer so as to cause hydrosilylation or mercaptation and thereby obtain a crosslinkable silicon group-containing polyoxyalkylene-based polymer. As for the unsaturated group-containing polyoxyalkylene-based polymer, an organic polymer having a functional group such as hydroxyl group is reacted with an organic compound having an active group reactive with the functional group above and an unsaturated group, whereby a polyoxyalkylene-based polymer containing an unsaturated group can be obtained.

Other specific examples of the polymer reaction method include a method of reacting a polyoxyalkylene-based polymer having a hydroxyl group at a terminal and a compound having an isocyanate group and a crosslinkable silicon group, and a method of reacting a polyoxyalkylene-based polymer having an isocyanate group at a terminal and a compound having an active hydrogen group such as hydroxyl group or amino group and a crosslinkable silicon group. When an isocyanate compound is used, a crosslinkable silicon group-containing polyoxyalkylene-based polymer can be easily obtained.

Specific examples of the crosslinkable silicon group-containing polyoxyalkylene-based polymer include those proposed in JP-B-45-36319, JP-B-46-12154, JP-A-50-156599, JP-A-54-6096, JP-A-55-13767, JP-A-57-164123, JP-B-3-2450, JP-A-2005-213446, JP-A-2005-306891, International Publication No. WO2007-040143, U.S. Patent Nos. 3,632,557, 4,345,053 and 4,960,844, etc.

These crosslinkable silicon group-containing polyoxyalkylene-based polymers may be used individually, or two or more thereof may be used in combination.

The saturated hydrocarbon-based polymer is a polymer containing substantially no carbon-carbon unsaturated bond except for an aromatic ring, and the polymer forming the skeleton thereof can be obtained by a method of, for example, (1) polymerizing, as a main monomer, an olefin-based compound having a carbon number of 2 to 6, such as ethylene, propylene, 1-butene and isobutylene, or (2) homopolymerizing a diene-based compound such as butadiene and isoprene or copolymerizing the compound with the olefin-based compound above, and then hydrogenating the obtained polymer. An isobutylene polymer and a hydrogenated polybutadiene polymer are preferred, because introduction of a functional group into a terminal and control of the molecular weight are facilitated and the number of terminal functional groups can be made large, and an isobutylene-based polymer is more preferred.

An organic polymer with the main chain skeleton being a saturated hydrocarbon-based polymer is characterized in that the heat resistance, weather resistance, durability and moisture barrier property are excellent.

The isobutylene-based polymer may be a polymer in which all monomer units are formed of an isobutylene unit, or may be a copolymer with another monomer, but in view of rubber properties, a polymer containing 50 mass% or more of an isobutylene-derived repeating unit is preferred, a polymer containing 80 mass% or more of the repeating unit is more preferred, and a polymer containing from 90 to 99 mass% of the repeating unit is still more preferred.

As the synthesis method of a saturated hydrocarbon-based polymer, various polymerization methods have been conventionally reported, but among others, a large number of so-called living polymerization methods have been developed in recent years. A saturated hydrocarbon-based polymer, particularly, an isobutylene-based polymer, can be easily produced by using inifer polymerization found by Kennedy et al. (J.P. Kennedy et al., J. Polymer Sci., Polymer Chem. Ed., 1997, Vol. 15, page 2843), and it is known that a polymer having a molecular weight of approximately from 500 to 100,000 and a molecular weight distribution of 1.5 or less can be polymerized and various functional groups can be introduced into a molecular terminal.

The production method of a crosslinkable silicon group-containing saturated hydrocarbon-based polymer is described, for example, in JP-B-4-69659, JP-B-7-108928, JP-A-63-254149, JP-A-64-22904, JP-A-1-197509, Japanese Patent Nos. 2539445 and 2873395, and JP-A-7-53882, but the production method is not limited thereto in particular.

These crosslinkable silicon group-containing saturated hydrocarbon-based polymers may be used individually, or two or more thereof may be used in combination.

The (meth)acrylic acid ester-based monomer constituting the main chain of the (meth)acrylic acid ester-based polymer above is not particularly limited, and various monomers may be used. Examples thereof include a (meth)acrylic acid; an alkyl (meth)acrylate ester-based monomer such as methyl (meth)acrylate, ethyl (meth)acrylate, n-propyl (meth)acrylate, isopropyl (meth)acrylate, n-butyl (meth)acrylate, isobutyl (meth)acrylate, tert-butyl (meth)acrylate, n-pentyl (meth)acrylate, n-hexyl (meth)acrylate, n-heptyl (meth)acrylate, n-octyl (meth)acrylate, 2-ethylhexyl (meth)acrylate, nonyl (meth)acrylate, decyl (meth)acrylate, dodecyl (meth)acrylate and stearyl (meth)acrylate; an alicyclic (meth)acrylic acid ester-based monomer such as cyclohexyl (meth)acrylate, isobornyl (meth)acrylate, dicyclopentenyloxyethyl (meth)acrylate, dicyclopentanyl (meth)acrylate, tert-butylcyclohexyl (meth)acrylate, tetrahydrofurfuryl (meth)acrylate, tetramethylpiperidinyl (meth)acrylate and pentamethylpiperidinyl (meth)acrylate; an aromatic (meth)acrylic acid ester-based monomer such as phenyl (meth)acrylate, toluyl (meth)acrylate, benzyl (meth)acrylate, phenoxyethyl (meth)acrylate, nonylphenoxypolyethylene glycol (meth)acrylate, paracumylphenoxyethylene glycol (meth)acrylate, hydroxyethylated o-phenylphenol (meth)acrylate, 2-hydroxy-3-phenoxypropyl (meth)acrylate, phenoxydiethylene glycol (meth)acrylate, phenoxypolyethylene glycol (meth)acrylate and phenylthioethyl (meth)acrylate; a (meth)acrylic acid ester-based monomer such as 2-methoxyethyl (meth)acrylate, 3-methoxybutyl (meth)acrylate, 2-hydroxyethyl (meth)acrylate, 2-hydroxypropyl (meth)acrylate, glycidyl (meth)acrylate and 2-aminoethyl (meth)acrylate; a silyl group-containing (meth)acrylic acid ester-based monomer such as γ-(methacryloyloxypropyl)trimethoxysilane, γ-(methacryloyloxypropyl)dimethoxymethylsilane, methacryloyloxymethyltrimethoxysilane, methacryloyoxymethyltriethoxysilane, methacryloyloxymethyldimethoxymethylsilane and methacryloyloxymethyldiethoxymethylsilane; a (meth)acrylic acid derivative such as (meth)acrylic acid-ethylene oxide adduct; and a fluorine-containing (meth)acrylic acid ester-based monomer such as trifluoromethylmethyl (meth)acrylate, 2-trifluoromethylethyl (meth)acrylate, 2-perfluoroethylethyl (meth)acrylate, 2-perfluoroethyl-2-perfluorobutylethyl (meth)acrylate, perfluoroethyl (meth)acrylate, trifluoromethyl (meth)acrylate, bis(trifluoromethyl)methyl (meth)acrylate, 2-trifluoromethyl-2-perfluoroethylethyl (meth)acrylate, 2-perfluorohexylethyl (meth)acrylate, 2-perfluorodecylethyl (meth)acrylate and 2-perfluorohexadecylethyl (meth)acrylate.

In the (meth)acrylic acid ester-based polymer, any of the following vinyl-based monomers may also be copolymerized together with the (meth)acrylic acid ester-based monomer. Examples of the vinyl-based monomer include a styrene-based monomer such as styrene, vinyltoluene, α-methylstyrene, chlorostyrene, styrenesulfonic acid and salts thereof; a fluorine-containing vinyl monomer such as perfluoroethylene, perfluoropropylene and vinylidene fluoride; a silicon-containing vinyl-based monomer such as vinyltrimethoxysilane and vinyltriethoxysilane; maleic anhydride, maleic acid, and monoalkyl and dialkyl esters of maleic acid; fumaric acid and monoalkyl and dialkyl esters of fumaric acid; a maleimide-based monomer such as maleimide, methylmaleimide, ethylmaleimide, propylmaleimide, butylmaleimide, hexylmaleimide, octylmaleimide, dodecylmaleimide, stearylmaleimide, phenylmaleimide and cyclohexylmaleimide; a nitrile group-containing vinyl-based monomer such as acrylonitrile and methacrylonitrile; an amide group-containing vinyl-based monomer such as acrylamide and methacrylamide; vinyl esters such as vinyl acetate, vinyl propionate, vinyl pivalate, vinyl benzoate and vinyl cinnamate; alkenes such as ethylene and propylene; conjugated dienes such as butadiene and isoprene; and vinyl chloride, vinylidene chloride, allyl chloride, and allyl alcohol.

These monomers may be used individually, or a plurality thereof may be copolymerized. Among others, in view of physical properties, etc. of the product, a polymer composed of a (meth)acrylic acid-based monomer is preferred, a (meth)acrylic acid ester-based polymer using one alkyl (meth)acrylate ester monomer or two or more alkyl (meth)acrylate ester monomers and, if desired, using another (meth)acrylic acid monomer in combination is more preferred, and by using a silyl group-containing (meth)acrylic acid ester-based monomer in combination, the number of silicon groups in the (meth)acrylic acid ester-based polymer (A) can be controlled. In particular, a methacrylic acid ester-based polymer composed of a methacrylic acid ester monomer is preferred because of good adhesiveness. In the case of lowering the viscosity or imparting flexibility or tackiness, it is preferable to appropriately use an acrylic acid ester monomer. Here, the (meth)acrylic acid as used in the description of the present invention indicates an acrylic acid and/or a methacrylic acid.

In the present invention, the method for obtaining the (meth)acrylic acid ester-based polymer is not particularly limited, and known polymerization methods (for example, synthesis methods described in JP-A-63-112642, JP-A-2007-230947, JP-A-2001-40037, JP-A-2003-313397, etc.) may be used. A radical polymerization method using a radical polymerization reaction is preferred, and the radical polymerization method includes a radical polymerization method where predetermined monomer units are copolymerized using a polymerization initiator (free radical polymerization), and a controlled radical polymerization method where a reactive silyl group can be introduced into a controlled position such as terminal. However, a polymer obtained by a normal free radical polymerization method using, as the polymerization initiator, an azo-based compound, a peroxide, etc. has a problem that the value of molecular weight distribution is generally as large as 2 or more and the viscosity is high. Accordingly, a controlled radical polymerization method is preferably used for obtaining a (meth)acrylic acid ester-based polymer having a narrow molecular weight distribution and a low viscosity, which is a (meth)acrylic acid ester-based polymer having a high proportion of crosslinkable functional groups at a molecular chain terminal.

The controlled radical polymerization method includes a free radical polymerization method using a chain transfer agent having a specific functional group, and a living radical polymerization method. A living radical polymerization method such as Reversible Addition-Fragmentation chain Transfer (RAFT) polymerization method and radical polymerization method using a transition metal complex (Transition-Metal-Mediated Living Radical Polymerization), is preferred. In addition, a reaction using a thiol compound having a reactive silyl group, and a reaction using a reactive silyl group-containing thiol compound and a metallocene compound (JP-A-2001-40037), are also suitable.

These crosslinkable silicon group-containing (meth)acrylic acid ester-based polymers may be used individually, or two or more thereof may be used in combination.

The above-described crosslinkable silicon group-containing organic polymers may be used individually, or two or more thereof may be used in combination. Specifically, an organic polymer formed by blending two or more polymers selected from the group consisting of a crosslinkable silicon group-containing polyoxyalkylene-based polymer, a crosslinkable silicon group-containing saturated hydrocarbon-based polymer, and a crosslinkable silicon group-containing (meth)acrylic acid ester-based polymer, may also be used.

The production method of an organic polymer formed by blending a crosslinkable silicon group-containing polyoxyalkylene-based polymer and a crosslinkable silicon group-containing (meth)acrylic acid ester-based polymer is proposed in JP-A-59-122541, JP-A-63-112642, JP-A-6-172631, JP-A-11-116763, etc., but the production method is not limited thereto in particular. A preferable specific example is a method of producing an organic polymer by blending a crosslinkable silicon group-containing polyoxyalkylene-based polymer with a crosslinkable silicon group-containing copolymer of which molecular chain is substantially composed of a (meth)acrylic acid ester monomer unit represented by the following formula (5):

-CH₂-C(R³)(COOR⁴)- (5)

(wherein R³ represents a hydrogen atom or a methyl group, and R⁴ represents an alkyl group having a carbon number of 1 to 5) and a (meth)acrylic acid ester monomer unit represented by the following formula (6):

-CH₂-C(R³)(COOR⁵)- (6)

(wherein R³ is the same as above, and R⁵ represents an alkyl group having a carbon number of 6 or more).

R⁴ in formula (5) includes, for example, an alkyl group having a carbon number of 1 to 5, preferably from 1 to 4, more preferably from 1 to 2, such as methyl group, ethyl group, propyl group, n-butyl group and tert-butyl group. The alkyl group of R⁴ may be one member alone or a mixture of two or more members.

R⁵ in formula (6) includes, for example, a long-chain alkyl group having a carbon number of 6 or more, usually from 7 to 30, preferably from 8 to 20, such as 2-ethylhexyl group, lauryl group, tridecyl group, cetyl group, stearyl group and behenyl group. As with R⁴, the alkyl group of R⁵ may be one member alone or a mixture of two or more members.

The molecular chain of the (meth)acrylic acid ester-based copolymer is substantially composed of monomer units of formulae (5) and (6), and the "substantially" as used herein means that the total of monomer units of formulae (5) and (6) present in the copolymer exceeds 50 mass%. The total of monomer units of formulae (5) and (6) is preferably 70 mass% or more. In addition, the abundance ratio between the monomer unit of formula (5) and the monomer unit of formula (6) is, in terms of mass ratio, preferably from 95:5 to 40:60, more preferably from 90:10 to 60:40.

The monomer unit except for formulae (5) and (6) (hereinafter, sometimes referred to another monomer unit), which may be contained in the copolymer, includes, for example, monomer units derived from: an α,β-unsaturated carboxylic acid such as acrylic acid and methacrylic acid; an amide group-containing monomer such as acrylamide, methacrylamide, N-methylolacrylamide and N-methylolmethacrylamide; an epoxy group-containing monomer such as glycidyl acrylate and glycidyl methacrylate; an amino group-containing monomer such as diethylaminoethyl acrylate, diethylaminoethyl methacrylate and aminoethyl vinyl ether; and other monomer units such as acrylonitrile, styrene, α-methylstyrene, alkyl vinyl ether, vinyl chloride, vinyl acetate, vinyl propionate and ethylene.

As the crosslinkable silicon group-containing (meth)acrylic acid ester-based polymer used in the method of producing an organic polymer formed by blending a crosslinkable silicon group-containing polyoxyalkylene-based polymer and a crosslinkable silicon group-containing (meth)acrylic acid ester-based polymer, there may also be used known (meth)acrylic acid ester-based copolymers, for example, a (meth)acrylic acid ester-based copolymer having a crosslinkable silicon group, described in JP-A-63-112642, in which the molecular chain is substantially composed of (1) an alkyl (meth)acrylate ester monomer unit containing an alkyl group having a carbon number of 1 to 8 and (2) an alkyl (meth)acrylate ester monomer unit containing an alkyl group having a carbon number of 10 or more.

The number average molecular weight of the (meth)acrylic acid ester-based polymer is preferably from 600 to 10,000, more preferably from 600 to 5,000, still more preferably from 1,000 to 4,500. With a number average molecular weight in the range above, the compatibility with the crosslinkable silicon group-containing polyoxyalkylene-based polymer can be enhanced. These (meth)acrylic acid ester-based polymers may be used individually, or two or more thereof may be used in combination. The blending ratio between the crosslinkable silicon group-containing polyoxyalkylene-based polymer and the crosslinkable silicon group-containing (meth)acrylic acid ester-based polymer is not particularly limited, but the ratio of the (meth)acrylic acid ester-based polymer is preferably from 10 to 60 parts by mass, more preferably from 20 to 50 parts by mass, still more preferably from 25 to 45 parts by mass, per 100 parts by mass of the total of the (meth)acrylic acid ester-based polymer and the polyoxyalkylene-based polymer. If the ratio of the (meth)acrylic acid ester-based polymer exceeds 60 parts by mass, the viscosity becomes high to disadvantageously deteriorate the workability.

The organic polymer formed by blending a crosslinkable silicon group-containing saturated hydrocarbon-based polymer and a crosslinkable silicon group-containing (meth)acrylic acid ester-based copolymer is proposed in JP-A-1-168764, JP-A-2000-186176, etc., but the organic polymer is not limited thereto in particular.

As the production method of an organic polymer formed by blending a crosslinkable silicon group-containing (meth)acrylic acid ester-based copolymer, other than those described above, a method of performing the polymerization of a (meth)acrylic acid ester-based monomer in the presence of a crosslinkable silicon group-containing organic polymer can be utilized. This production method is specifically described in JP-A-59-78223, JP-A-59-168014, JP-A-60-228516, JP-A-60-228517, etc., but the production method is not limited thereto.

In the case of using a blend of two or more polymers, the crosslinkable silicon group-containing saturated hydrocarbon-based polymer and/or the crosslinkable silicon group-containing (meth)acrylic acid ester-based polymer are preferably used in a ratio of 10 to 200 parts by mass, more preferably from 20 to 80 parts by mass, per 100 parts by mass of the crosslinkable silicon group-containing polyoxyalkylene-based polymer.

In the present invention, the photobase generator (B), when irradiated with light, acts as a curing catalyst for the crosslinkable silicon group-containing organic polymer (A). The photobase generator (B) is not particularly limited as long as it is a substance capable of generating a base under an action of an active energy ray such as ultraviolet ray, electron beam, X-ray, infrared ray and visible ray, and there may be used a known photobase generator, for example, (1) a salt of a base and an organic acid, which is decomposed by decarboxylation upon irradiation with an active energy ray such as ultraviolet ray, visible light and infrared ray, (2) a compound which is decomposed by an intramolecular nucleophilic substitution reaction, a rearrangement reaction, etc. to release amines, or (3) a substance that releases a base by causing some sort of chemical reaction upon irradiation with an energy ray such as ultraviolet ray, visible light and infrared ray.

The base generated from the photobase generator (B) is not particularly limited, but an organic base such as amine compound is preferred, and examples thereof include primary alkylamines such as ethylamine, propylamine, octylamine, cyclohexylamine and 1,5-diaminopentane; primary aromatic amines such as N-methylbenzylamine and 4,4'-methylenedianiline; secondary alkylamines such as diethylamine; amines having a secondary amino group or a tertiary amino group, such as imidazole; tertiary alkylamines such as trimethylamine, triethylamine, tributylamine and 1,8-diazabicyclo[2.2.2]octane (DABCO); a tertiary heterocyclic amine such as 4-isopropylmorpholine; tertiary aromatic amines such as 4-dimethylaminopyridine and N,N-dimethyl(3-phenoxy-2-hydroxypropyl)amine; amidines such as 1,8-diazabicyclo[5.4.0]undecene-7 (DBU) and 1,5-diazabicyclo[4.3.0]nonene-5 (DBN); and a phosphazene derivative such as tris(dimethylamino)(methylimino)phosphorane described in JP-A-2011-80032. An amine compound having a tertiary amino group is preferred, and amidines and a phosphazene derivative, which are a strong base, are more preferred. As for the amidines, both acyclic amidines and cyclic amidines can be used, but cyclic amidines are preferred.

These bases may be used individually, or two or more thereof may be used in combination.

Acyclic amidines include, for example, a guanidine-based compound and a biguanide-based compound.

The guanidine-based compound includes guanidine, 1,1,3,3-tetramethylguanidine, 1-butylguanidine, 1-phenylguanidine, 1-o-tolylguanidine, 1,3-diphenylguanidine, etc.

The biguanide-based compound includes butylbiguanide, 1-o-tolylbiguanide, and 1-phenylbiguanide.

A photobase generator capable of generating, among acyclic amidine compounds, an aryl-substituted guanidine-based compound or an aryl-substituted biguanide-based compound, such as phenylguanidine, 1-o-tolylbiguanide or 1-phenylbiguanide, is preferred, because when used as a catalyst for the polymer (A), for example, the surface curability tends to be improved and the cured product obtained tends to exhibit good adhesiveness.

The cyclic amidines include a cyclic guanidine-based compound, an imidazoline-based compound, an imidazole-based compound, a tetrahydropyrimidine-based compound, a triazabicycloalkene-based compound, and a diazabicycloalkene-based compound.

The cyclic guanidine-based compound includes, for example, 1,5,7-triaza-bicyclo[4.4.0]dec-5-ene described in JP-A-2011-80032, 7-methyl-1,5,7-triaza-bicyclo[4.4.0]dec-5-ene, 7-ethyl-1,5,7-triaza-bicyclo[4.4.0]dec-5-ene, and 7-isopropyl-1,5,7-triaza-bicyclo[4.4.0]dec-5-ene.

The imidazoline-based compound includes, for example, 1-methylimidazoline, 1,2-dimethylimidazoline, 1-methyl-2-ethylimidazoline, and 1-methyl-2-octylimidazoline.

The imidazole-based compound includes, for example, imidazole and 2-ethyl-4-methylimidazole.

The tetrahydropyrimidine-based compound includes, for example, 1-methyl-1,4,5,6-tetrahydropyrimidine, 1,2-dimethyl-1,4,5,6-tetrahydropyrimidine, 1-methyl-2-ethyl-1,4,5,6-tetrahydropyrimidine, 1-methyl-2-butyl-1,4,5,6-tetrahydropyrimidine, and 1-ethyl-2-octyl-1,4,5,6-tetrahydropyrimidine.

The triazabicycloalkene-based compound includes, for example, 7-methyl-1,5,7-triazabicyclo[4.4.0]decene-5, and 7-ethyl-1,5,7-triazabicyclo[4.4.0]decene-5.

The diazabicycloalkene-based compound includes, for example, 1,5-diazabicyclo[4.2.0]octene-5, 1,8-diazabicyclo[7.2.0]undecene-8, 1,4-diazabicyclo[3 .3.0] octene-4, 3-methyl-1,4-diazabicyclo[3.3.0]octene-4, 3,6,7,7-tetramethyl-1,4-diazabicyclo[3.3.0]octene-4, 7,8,8-trimethyl-1,5-diazabicyclo[4.3.0]nonene-5, 1,8-diazabicyclo[7.3.0]dodecene-8, 1,7-diazabicyclo[4.3.0]nonene-6, 8-phenyl-1,7-diazabicyclo[4.3.0]nonene-6, 1,5-diazabicyclo[4.3.0]nonene-5, 1,5-diazabicyclo[4.4.0]decene-5, 4-phenyl-1,5-diazabicyclo[4.4.0]decene-5, 1,8-diazabicyclo[5.3.0]decene-7, 1,8-diazabicyclo[7.4.0]tridecene-8, 1,8-diazabicyclo[5.4.0]undecene-7, 6-methylbutylamino-1,8-diazabicyclo[5.4.0]undecene-7, 6-methyloctylamino-1,8-diazabicyclo[5.4.0]undecene-7, 6-dibutylamino-1,8-diazabicyclo[5.4.0]undecene-7, 6-butylbenzylamino-1,8-diazabicyclo[5.4.0]undecene-7, 6-dihexylamino-1,8-diazabicyclo[5.4.0]undecene-7, 9-methyl-1,8-diazabicyclo[5.4.0]undecene-7, 9-methyl-1,8-diazabicyclo[5.3.0]decene-7, 1,6-diazabicyclo[5.5.0]dodecene-6, 1,7-diazabicyclo[6.5.0]tridecene-7, 1,8-diazabicyclo[7.5.0]tetradecene-8, 1,10-diazabicyclo[7.3.0]dodecene-9, 1,10-diazabicyclo[7.4.0]tridecene-9, 1,14-diazabicyclo[11.3.0]hexadecene-13, and 1,14-diazabicyclo[11.4.0]heptadecene-13.

Among the cyclic amidines described above, 1,8-diazabicyclo[5.4.0]undecene-7 (DBU) and 1,5-diazabicyclo[4.3.0]nonene-5 (DBN) are particularly preferred, because these are easily available in industry and thanks to the conjugated acid having a pKa value of 12 or more, exhibit high catalytic activity.

As the photobase generator (B) for use in the present invention, a known photobase generator may be used, but a photolatent amine compound capable of generating an amine compound under an action of an active energy ray is preferred. As the photolatent amine compound, any of a photolatent primary amine capable of generating a primary amino group-containing amine compound under an action of an active energy ray, a photolatent secondary amine capable of generating a secondary amino group-containing amine compound under an action of an active energy ray, and a photolatent tertiary amine capable of generating a tertiary amino group-containing amine compound under an action of an active energy ray may be used, but from the standpoint that the base generated exhibits high catalytic activity, a photolatent tertiary amine is more preferred.

The photolatent primary amine and the photolatent secondary amine include, for example, an ortho-nitrobenzyl urethane-based compound such as 1,3-bis[N-(2-nitrobenzyloxycarbonyl)-4-piperidyl]propane, N-{[(3-nitro-2-naphthalenemethyl)oxy]carbonyl}-2,6-dimethylpiperidine, N-{[(6,7-dimethoxy-3-nitro-2-naphthalenemethyl)oxy]carbonyl}-2,6-dimethylpiperidine, N-(2-nitrobenzyloxycarbonyl)piperidine, [[(2,6-dinitrobenzyl)oxy]carbonyl]cyclohexylamine, N,N'-bis(2-nitrobenzyloxycarbonyl)hexyldiamine, o-nitrobenzyl N- cyclohexylcarbamate, 2-nitrobenzyl cyclohexylcarbamate, 1-(2-nitrophenyl)ethyl cyclohexylcarbamate, 2,6-dinitrobenzyl cyclohexylcarbamate, 1-(2,6-dinitrophenyl)ethyl cyclohexylcarbamate, 1-(3,5-dimethoxyphenyl)-1-methylethyl cyclohexylcarbamate, bis[[(2-nitrobenzyl)oxy]carbonyl]hexane 1,6-diamine and N-(2-nitrobenzyloxycarbonyl)pyrrolidine; a dimethoxybenzyl urethane-based compound such as α,α-dimethyl-3,5-dimethoxybenzyl cyclohexylcarbamate and 3,5-dimethoxybenzyl cyclohexylcarbamate; benzoin carbamates such as 1-(3,5-dimethoxybenzoyl)-1-(3,5-dimethoxyphenyl)methyl cyclohexylcarbamate, 2-hydroxy-2-phenylacetophenone cyclohexylcarbamate, dibenzoinisophorone dicarbamate, 1-benzoyl-1-phenylmethyl cyclohexylcarbamate and 2-benzoyl-2-hydroxy-2-phenylethyl cyclohexylcarbamate; o-acyloximes such as o-benzylcarbonyl-N-(1-phenylethylidene)hydroxylamine;
o-carbamoyloximes such as [(pentane-1,5-diyl)biscarbamoyl]bis(diphenylmethylidenehydroxylamine) and α-(cyclohexylcarbamoyloxyimino)-a-(4-methoxyphenyl)acetonitrile; N-hydroxyimidocarbamates such as N-(octylcarbamoyloxy)phthalimide and N-(cyclohexylcarbamoyloxy)succinimide; a formanilide derivative such as 4,4'-methylenebis(formanilide); aromatic sulfonamides such as N-cyclohexyl-2-naphthalenesulfonamide and N-cyclohexyl-p-toluenesulfonamide; and a cobalt amine complex such as Co(NH₂C₃H₇)Br+ClO₄⁻.

The photolatent tertiary amine includes, for example, an ammonium α-ketocarboxylate such as a dimethyl benzyl ammonium salt of phenylglyoxylic acid and a tri-n-butyl ammonium salt of phenylglyoxylic acid, described in JP-A-55-22669; a benzhydryl ammonium salt derivative such as trimethylbenzhydrylammonium iodide, 1-(9H-fluoren-9-yl)-1-azabicyclo[2,2,2]octanium bromide, 1-(2-acetyl-9H-fluoren-9-yl)-1-azabicyclo[2,2,2]octanium bromide, 1-(2-methoxy-9H-fluoren-9-yl)-1-azabicyclo[2,2,2]octanium bromide and 1-(2-phenacyl-9H-fluoren-9-yl)-1-azabicyclo[2,2,2]octanium bromide, described in JP-A-2007-119766; an α-onium acetophenone derivative; amineimides such as [(2-hydroxy-3-phenoxypropyl)dimethylaminio](4-nitrobenzoyl)amine anion, [(2-hydroxy-3-phenoxypropyl)dimethylaminio](4-cyanobenzoyl)amine anion, [(2-hydroxy-3-phenoxypropyl)dimethylaminio](4-methoxybenzoyl)amine anion, [(2-hydroxy-3-phenoxypropyl)dimethylaminio]benzoylamine anion and [(2-hydroxy-3-phenoxypropyl)dimethylaminio][4-(dimethylamino)benzoyl]amine anion, described in WO2002/051905; benzyloxycarbonylimidazoles such as N-(2-nitrobenzyloxycarbonyl)imidazole, N-(3-nitrobenzyloxycarbonyl)imidazole, N-(4-chloro-2-nitrobenzyloxycarbonyl)imidazole, N-(4-nitrobenzyloxycarbonyl)imidazole, N-(5-methyl-2-nitrobenzyloxycarbonyl)imidazole and N-(4,5-dimethyl-2-nitrobenzyloxycarbonyl)imidazole, described in JP-A-9-40750; benzyloxycarbonylguanidines such as benzyloxycarbonyltetramethylguanidine, described in WO97/31033; an α-aminoalkene derivative such as 5-(2'-(4"-biphenyl)allyl)-1,5-diazabicyclo[4.3.0]nonane, 5-(2'-(2"-naphthyl)allyl)-1,5-diazabicyclo[4.3.0]nonane, 5-(2'-(4"-diethylaminophenyl)allyl)-1,5-diazabicyclo[4.3.0]nonane, 5-(1'-methyl, 2'-(4"-biphenyl)allyl)-1,5-diazabicyclo[4.3.0]nonane, 5-(1'-methyl, 2'-(2"-thioxanthyl)allyl)-1,5-diazabicyclo[4.3.0]nonane, 5-(1'-methyl, 2'-(2"-fluorenyl)allyl)-1,5-diazabicyclo[4.3.0]nonane and 8-(2'-(4"-biphenyl)allyl)-(1,8-diazabicyclo[5.4.0]-7-undecene), described in JP-T-2001-515500 (the term "JP-T" as used herein means a published Japanese translation of a PCT patent application); an α-ammonium alkene derivative such as N-(2'-phenylallyl)-triethylammonium tetraphenylborate, 1-(2'-phenylallyl)-(1-azonia-4-azabicyclo[2,2,2]-octane)tetraphenylborate, 1-(2'-phenylallyl)-(1-azonia-4-azabicyclo[2,2,2]-octane)tetraphenylborate and 1-(2'-phenylallyl)-(1-azonia-4-azabicyclo[2,2,2]-octane)tris(3-fluorophenyl)hexylborate, described in JP-T-2002-523393; an α-aminoketone derivative such as 4-(methylthiobenzoyl)-1-methyl-1-morpholinoethane (Irgacure 907), 2-benzyl-2-dimethylamino-1-(4-morpholinophenyl)-butanone (Irgacure 369), 2-(4-methylbenzyl)-2-dimethylamino-1-(4-morpholinophenyl)-butanone (Irgacure 379), described in JP-A-11-71450, 5-(4'-phenyl)phenacyl-1,5-diazabicyclo[4.3.0]nonane, 5-phenacyl-1,5-diazabieyclo[4.3.0]nonane, 5-naphthoylmethyl-1,5-diazabicyclo[4.3.0]nonane, 5-(1'-pyrenylcarbonylmethyl)-1,5-diazabicyclo[4.3.0]nonane, 5-(4'-nitro)phenacyl-1,5-diazabicyclo[4.3.0]nonane, 5-(2',4'-dimethoxy)phenacyl-1,5-diazabicyclo[4.3.0]nonane, 5-(9'-anthroylmethyl)-1,5-diazabicyclo[4.3.0]nonane and 8-(4'-phenyl)phenacyl-(1,8-diazabicyclo[5.4.0]-7-undecene), described in JP-A-2001-512421; an α-ammonium ketone derivative such as phenacyltriethylammonium tetraphenylborate, (4-methoxyphenacyl)triethylammonium tetraphenylborate, 1-phenacyl-(1-azonia-4-azabicyclo[2,2,2]-octane)tetraphenylborate, (1,4-phenacyl-1,4-diazoniabicyclo[2.2.2]octane)bis(tetraphenylborate), 1-naphthoylmethyl-(1-azonia-4-azabicyclo[2,2,2]-octane)tetraphenylborate, 1-(4'-phenyl)phenacyl-(1-azonia-4-azabicyclo[2.2.2]octane)tetraphenylborate, 5-(4'-phenyl)phenacyl-(5-azonia-1-azabicyclo[4.3 .0]-5-nonene)tetraphenylborate, 5-(4'-methoxy)phenacyl-(5-azonia-1-azabicyclo[4.3.0]-5-nonene)tetraphenylborate, 5-(4'-nitro)phenacyl-(5-azonia-1-azabicyclo[4.3.0]-5-nonene)tetraphenylborate and 5-(4'-phenyl)phenacyl-(8-azonia-1-azabicyclo[5.4.0]-7-undecene)tetraphenylborate, described in JP-T-2001-513765 and WO2005/014696; a benzylamine derivative such as 5-benzyl-1,5-diazabicyclo[4.3.0]nonane, 5-(anthracen-9-yl-methyl)-1,5-diazabicyclo[4.3.0]nonane, 5-(4'-cyanobenzyl)-1,5-diazabicyclo[4.3.0]nonane, 5-(3'-cyanobenzyl)-1,5-diazabicyclo[4.3.0]nonane, 5-(2'-chlorobenzyl)-1,5-diazabicyclo[4.3.0]nonane, 5-(2',4',6'-trimethylbenzyl)-1,5-diazabicyclo[4.3.0]nonane, 5-(4'-ethenylbenzyl)-1,5-diazabicyclo[4.3.0]nonane, 5-(3'-methoxybenzyl)-1,5-diazabicyclo[4.3.0]nonane, 5-(naphth-2-yl-methyl)-1,5-diazabicyclo[4.3.0]nonane, 1,4-bis(1,5-diazabicyclo[4.3.0]nonanylmethyl)benzene and 8-(2',6'-dichlorobenzyl)-1,8-diazabicyclo[5.4.0]undecane, described in JP-T-2045-511536; and photobase generators described in WO2010/095390 and WO2009/122664, e.g., a benzylammonium salt derivative such as (9-anthryl)methyltriethylammonium tetraphenylborate, (9-oxo-9H-thioxanthen-2-yl)methyltriethylammonium tetraphenylborate, (9-anthryl)methyl 1-azabicyclo[2.2.2]octanium tetraphenylborate, (9-oxo-9H-thioxanthen-2-yl)methyl 1-azabicyclo[2.2.2]octanium tetraphenylborate, 9-anthrylmethyl-1-azabicyclo[2.2.2]octanium tetraphenylborate, 5-(9-anthrylmethyl)-1,5-diazabicyclo[4.3.0]-5-nonenium tetraphenylborate, 8-(9-anthrylmethyl)-1,8-diazabicyclo[5.4.0]-7-undecenium phenylglyoxylate, N-(9-anthrylmethyl)-N,N,N-trioctylammonium tetraphenylborate, 8-(9-oxo-9H-thioxanthen-2-yl)methyl-1,5-diazabicyclo[4.3.0]-5-nonenium tetraphenylborate, 8-(4-benzoylphenyl)methyl-1,8-diazabicyclo[5.4.0]-7-undecenium tetraphenylborate, {8-(tert-butyl-2-naphthalylmethyl)}-1,8-diazabicyclo[5.4.0]-7-undecenium tetraphenylborate, 8-(9-oxo-9H-thioxanthen-2-yl)methyl-1,8-diazabicyclo [5.4.0]-7-undecenium tetraphenylborate and N-benzophenonemethyltri-N-methylammonium tetraphenylborate.

In addition, a photolatent amine compound, for example, a carboxylate represented by the following formula (I) (e.g., JP-A-2009-280785 and JP-A-2011-80032); an ammonium carboxylate such as 3-quinuclidinol salt of 2-(carboxymethylthio)thioxanthone and 3-quinuclidinol salt of 2-(carboxymethoxy)thioxanthone, described in JP-A-2007-262276; a trans-o-coumaric acid derivative described in JP-A-2010-254982 and JP-A-2011-213783; and a diamine derivative such as N-(N'-((1-(4,5-dimethoxy-2-nitrophenyl)ethoxy)carbonyl)aminopropyl)-N-methylacetamide and N-(N'-(4,5-dimethoxy-2-nitrobenzyloxycarbonyl)aminopropyl)-6-heptanelactam, described in JP-A-2011-116869, may also be used.

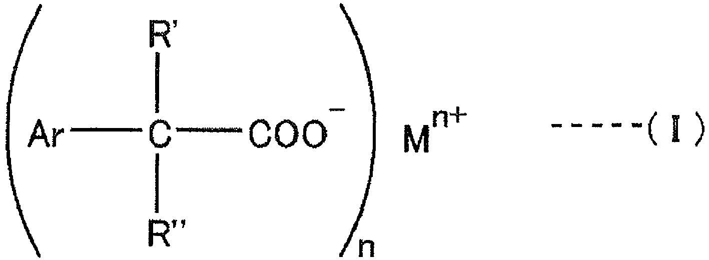

In formula (I), the Ar group is an aromatic ring, the aromatic ring may contain, as a substituent, a benzoyl group, a nitro group, an alkoxy group or an alkyl group, and the substituent of the aromatic ring may have a ring structure. Each of R' and R" is a hydrogen atom, an alkoxy group, an alkyl group, a hydroxyl group or an aryl group. M is an alkali metal, an alkaline earth metal, or a base composed of any of imidazoles represented by the following formula (II), amidines represented by the following formula (III), guanidines represented by the following formula (IV), and a phosphazene derivative represented by the following formula (V). n represents an integer of 1 or 2.

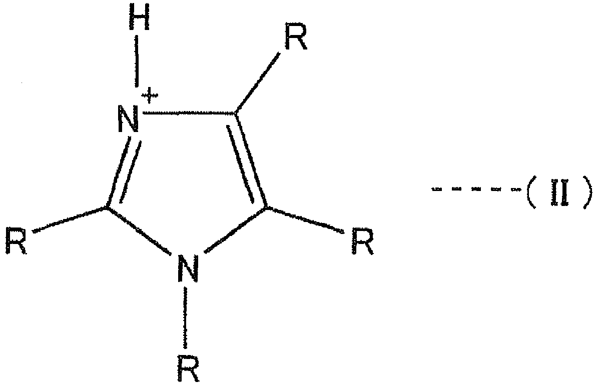

In formula (II), each R independently represents a hydrogen atom, an alkyl group having a carbon number of 1 to 4 (which may contain a heteroatom such as S), or a phenyl group.

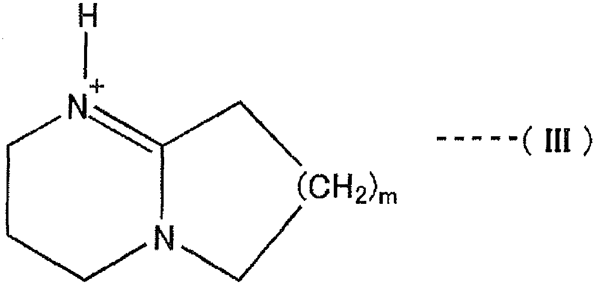

In formula (III), m represents an integer of 1 to 3.

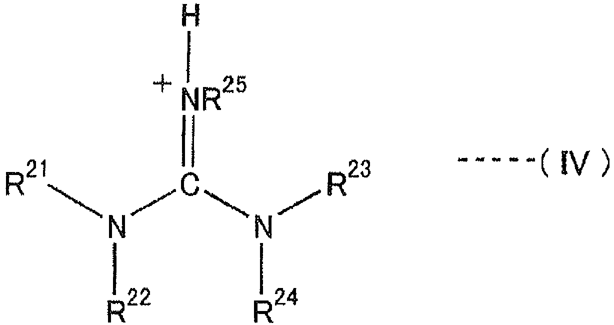

In formula (IV), each of R²¹ to R²⁵ independently represents a hydrogen atom, an alkyl group or an aryl group, and the alkyl group may be a ring structure.

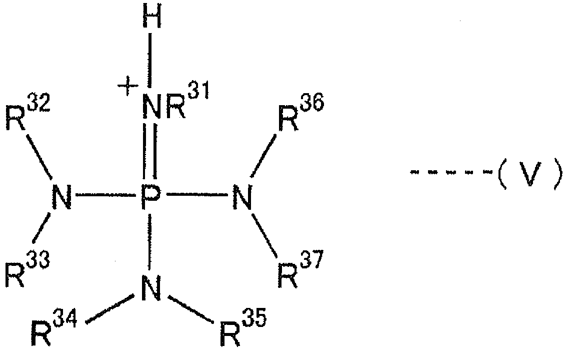

In formula (V), each of R³¹ to R³⁷ independently represents a hydrogen atom, an alkyl group or an aryl group, and the alkyl group may be a ring structure.

The carboxylate represented by formula (I) is preferably a carboxylate represented by the following formula (VI):

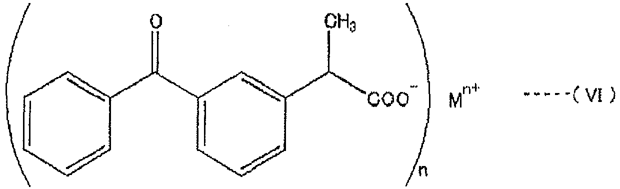

In formula (VI), M and n are the same as in formula (I).

As the photobase generator (B), suitable examples thereof include, for example, α-aminoketone compounds represented by the following formulae (VII) to (X):

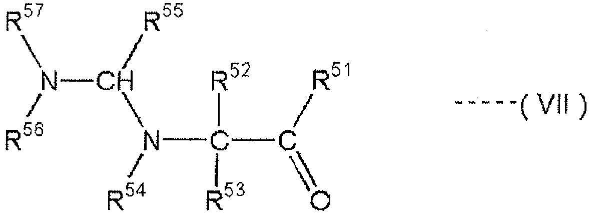

In formula (VII), R⁵¹ is an aromatic or heteroaromatic group. R⁵¹ is preferably an aromatic group (which is unsubstituted or substituted, one or more times, with a C₁-C₁₈ alkyl, a C₃-C₁₈ alkenyl, a C₃-C₁₈ alkynyl, a C₁-C₁₈ haloalkyl, NO₂, NR⁵⁸R⁵⁹, N₃, OH, CN, OR⁶⁰, SR⁶⁰, C(O)R⁶¹, C(O)OR⁶² or a halogen, wherein R⁵⁸, R⁵⁹, R⁶⁰, R⁶¹ and R⁶² are hydrogen or a C₁-C₁₈ alkyl) and is more preferably selected from phenyl, naphthyl, phenanthryl, anthracyl, pyrenyl, 5,6,7,8-tetrahydro-2-naphthyl, 5,6,7,8-tetrahydro-1-naphthyl, thienyl, banzo[b]thienyl, naphtho[2,3-b]thienyl, thiathrenyl, dibenzofuryl, chromenyl, xanthenyl, thioxanthyl, phenoxathiinyl, pyrrolyl, imidazolyl, pyrazolyl, pyrazinyl, pyrimidinyl, pyridazinyl, indolizinyl, isoindolyl, indolyl, indazolyl, purinyl, quinolizinyl, isoquinolyl, quinolyl, phthalazinyl, naphthyridinyl, quinoxalinyl, quinazolinyl, cinnolinyl, pteridinyl, carbazolyl, β-carbolinyl, phenanthridinyl, acridinyl, perimidinyl, phenanthrolinyl, phenazinyl, isothiazolyl, phenothiazinyl, isoxazolyl, furazanyl, terphenyl, stilbenyl, fluorenyl and phenoxazinyl.

Each of R⁵² and R⁵³ is, independently of one another, hydrogen, a C₁-C₁₅ alkyl, a C₃-C₁₈ alkenyl, a C₃-C₁₈ alkynyl or phenyl. When R⁵² is hydrogen or a C₁-C₁₈ alkyl, R⁵³ is further a -CO-R⁶⁴ group (wherein R⁶⁴ is a C₁-C₁₈ alkyl or phenyl); R⁵¹ and R⁵³ form a benzocyclopentanone group together with the carbonyl group and C atom to which R⁵³ is bonded; R⁵⁴ and R⁵⁶ together form a C₃ alkylene bridge; or R⁵⁵ and R⁵⁷ together form propylene or pentylene.

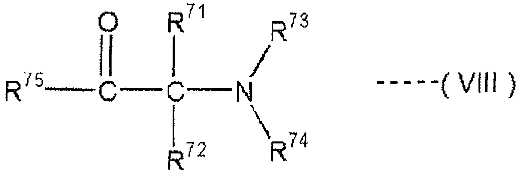

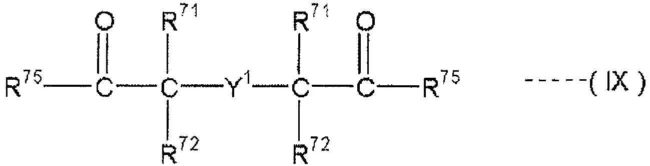

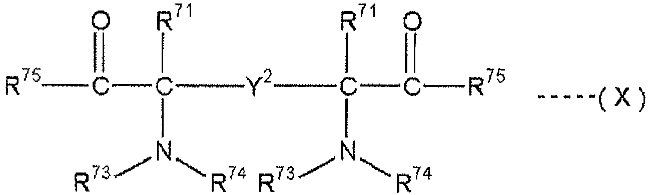

In formulae (VIII) to (X), each R⁷⁵ is independently an aromatic or heteroaromatic group, and examples thereof are the same as those of R⁵¹ in formula (VII). R⁷¹ and R⁷² have the same meanings as R⁵² and R⁵³ in formula (VII), and when a plurality of R⁷¹ or R⁷² are present, they may be the same or different.

R⁷³ represents an alkyl group having a carbon number of 1 to 12, or an alkyl group having a carbon number of 2 to 4 and being substituted with -OH, -an alkoxy group having a carbon number of 1 to 4, -CN or -COO(alkyl having a carbon number of 1 to 4), or R⁷³ represents an alkenyl group having a carbon number of 3 to 5, a cycloalkyl group having a carbon number of 5 to 12, or a phenyl-alkyl group having a carbon number of 1 to 3. R⁷⁴ represents an alkyl group having a carbon number of 1 to 12, or an alkyl group having a carbon number of 2 to 4 and being substituted with -OH, -an alkoxy group having a carbon number of 1 to 4, -CN or -COO(alkyl having a carbon number of 1 to 4); R⁷⁴ represents an alkenyl group having a carbon number of 3 to 5, a cycloalkyl group having a carbon number of 5 to 12, a phenyl-alkyl group having a carbon number of 1 to 3, a phenyl group that is unsubstituted or substituted with an alkyl group having a carbon number of 1 to 12, an alkoxy group having a carbon number of 1 to 4 or -COO(alkyl having a carbon number of 1 to 4); R⁷⁴ represents, together with R⁷³, an alkylene group having a carbon number of 1 to 7, a phenyl-alkylene group having a carbon number of 1 to 4, an o-xylylene group, a 2-butenylene group or an oxaalkylene group having a carbon number of 2 or 3; R⁷³ and R⁷⁴ together represent an alkylene group having a carbon number of 4 to 7, which may be interrupted by -O-, -S- or -CO-; or R⁷³ and R⁷⁴ together represent OH, an alkoxy group having a carbon number of 1 to 4, or an alkylene group having a carbon number of 3 to 7, which may be substituted with -COO(alkyl having a carbon number of 1 to 4). When a plurality of R⁷³ or R⁷⁴ are present, they may be the same or different.

Y¹ represents a divalent group represented by the following formula (XI), -N(R⁸¹)- or a divalent group represented by -N(R⁸¹)-R⁸²-N(R⁸¹)-, wherein R⁸¹ represents an alkyl group having a carbon number of 1 to 8, an alkenyl group having a carbon number of 3 to 5, a phenyl-alkyl group having a carbon number of 1 to 3, a hydroxyalkyl group having a carbon number of 1 to 4, or a phenyl group, and R⁸² represents an unbranched or branched alkylene group having a carbon number of 2 to 16, which may be interrupted by one or more -O- or -S-.

Y² represents an alkylene group having a carbon number of 1 to 6, a cyclohexylene group, or a direct bond.

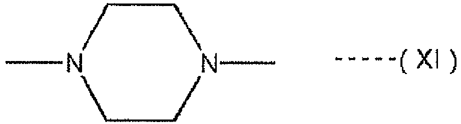

In addition, the photobase generator (B) includes, for example, an α-ammonium ketone compound represented by the following formula (XII):

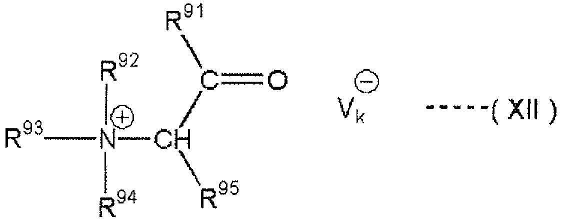

In formula (XII), k is 1 or 2 and corresponds to the number of positive charges of the cation. V⁻ is a counter anion, and examples thereof include a borate anion (e.g., tetraphenylborate, methyltriphenylborate, ethyltriphenylborate, propyltriphenylborate, butyltriphenylborate), a phenolate anions (e.g., phenolate, 4-tert-butylphenolate, 2,5-di-tert-butylphenolate, 4-nitrophenolate, 2,5-dinitrophenolate, 2,4,6-trinitrophenolate), and a carboxylate anion (e.g., benzoate anion, toluate anion, phenylglyoxylate anion). Among these, a borate anion and a carboxylate anion are preferred in view of photodegradability; a butyltriphenylborate anion, a tetraphenylborate anion, a benzoate anion and a phenylglyoxylate anion are more preferred; and a tetraphenylborate anion and a phenylglyoxylate anion are still more preferred in view of photodegradability and thermal stability.

In formula (XII), R⁹¹ has the same meaning as R⁵¹ of formula (VII).

Each of R⁹², R⁹³ and R⁹⁴ is, independently of one another, hydrogen, a C₁-C₁₈ alkyl, a C₃-C₁₈ alkenyl, a C₃-C₁₈ alkynyl or phenyl; R⁹² and R⁹³ and/or R⁹⁴ and R⁹³ form, independently of one another, a C₂-C₁₂ alkylene bridge; R⁹², R⁹³ and R⁹⁴ form, together with the nitrogen atom to which these members are bonded, a phosphazene base of a P₁, P₂ or P<t/4> type or a group having the following structural formula (a), (b), (c), (d), (e), (f) or (g).

R⁹⁵ is hydrogen or a C₁-C₁₈ alkyl group; or R⁹⁵ and R⁹¹ form a benzocyclopentanone group together with the carbon atoms to which these members are bonded.

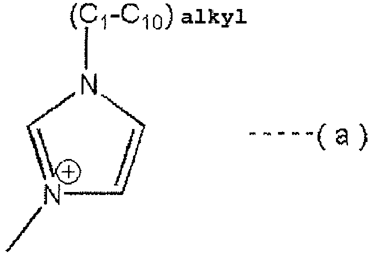

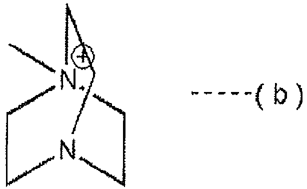

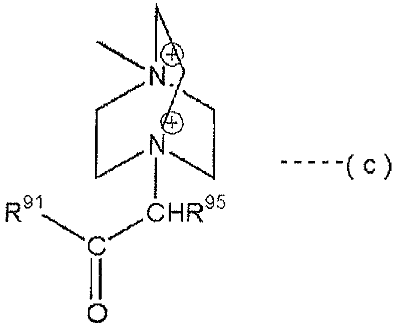

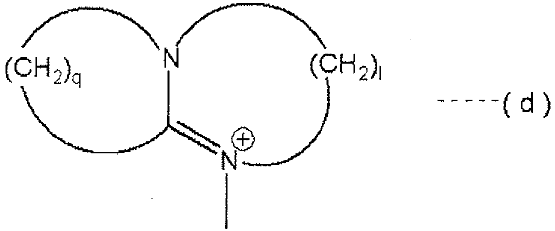

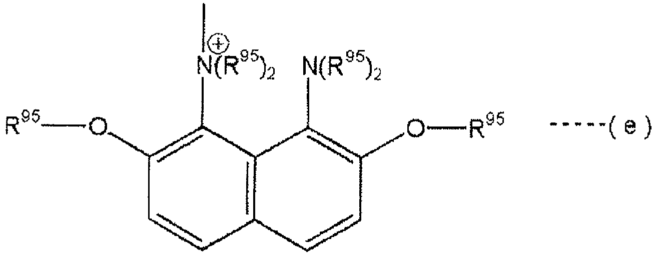

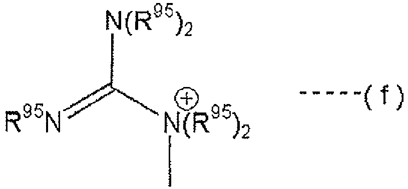

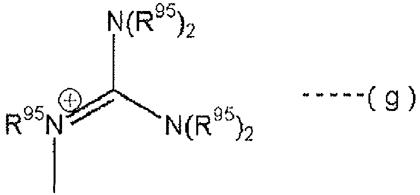

In formulae (a) to (g), R⁹¹ and R⁹⁵ have the same meanings as in formula (XII), and each of 1 and q is, independently of one another, a number of 2 to 12.

In addition, the photobase generator (B) includes, for example, a benzylamine compound represented by the following formula (XIII):

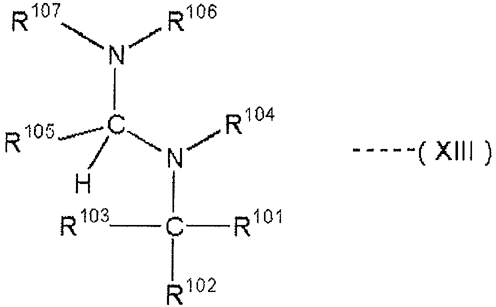

In formula (XIII), R¹⁰¹ has the same meaning as R⁵¹ in formula (VII). R¹⁰² and R¹⁰³ are, independently of one another, hydrogen or a C₁-C₁₈ alkyl. R¹⁰⁴ and R¹⁰⁶ together form a C₂-C₁₂ alkylene bridge that is unsubstituted or substituted with one or more C₁-C₄ alkyl groups. R¹⁰⁵ and R¹⁰⁷ together form, independently from R¹⁰⁴ and R¹⁰⁶, a C₂-C₁₂ alkylene bridge that is unsubstituted or substituted with one or more C₁-C₄ alkyl groups.

In addition, the photobase generator (B) includes, for example, a benzylammonium salt represented by the following formula (XIV):

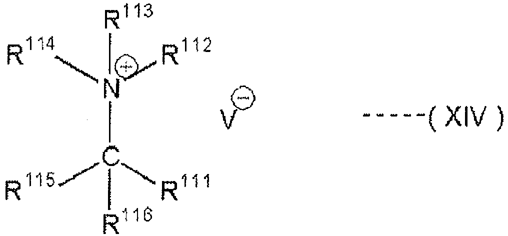

In formula (XIV), V⁻ has the same meaning as V⁻ in formula (XII). R¹¹¹ has the same meaning as R⁵¹ in formula (VII). Each of R¹¹² to R¹¹⁴ independently has the same meaning as R⁹², R⁹³ and R⁹⁴ in formula (XII). Each of R¹¹⁵ and R¹¹⁶ independently represents a hydrogen atom, an alkyl group having a carbon number of 1 to 20, or a phenyl group that may be substituted with a group selected from the group consisting of a halogen atom, an alkoxy group having a carbon number of 1 to 20, a nitro group, a carboxyl group, a hydroxyl group, a mercapto group, an alkylthio group having a carbon number of 1 to 20, an alkylsilyl group having a carbon number of 1 to 20, an acyl group having a carbon number of 1 to 20, an amino group, a cyano group, an alkyl group having a carbon number of 1 to 20, a phenyl group, a naphthyl group, a phenoxy group and a phenylthio group, and R¹¹⁵ and R¹¹⁶ may combine with each other to form a ring structure.

Among the above-described photobase generators (B), a photolatent tertiary amine is preferred, because the base generated exhibits high catalytic activity; a benzylammonium salt derivative, a benzyl-substituted amine derivative, an α-aminoketone derivative and an α-ammonium ketone derivative are preferred, because the base generation efficiency is high and the storage stability as a composition is good; and in particular, a benzylammonium salt derivative and a benzyl-substituted amine derivative are more preferred, because a base is not generated when non-irradiated with light but a base is efficiently generated when irradiated with light.

These photobase generators (B) may be used individually, or two or more thereof may be used in combination.

The blending ratio of the photobase generator (B) is not particularly limited but is preferably from 0.01 to 50 parts by mass, more preferably from 0.1 to 40 parts by mass, still more preferably from 0.5 to 30 parts by mass, per 100 parts by mass of the crosslinkable silicon group-containing organic polymer (A).

In the present invention, the (C1) silicon compound having an Si-F bond acts as a curing catalyst for the crosslinkable silicon group-containing organic polymer (A). As the (C1) silicon compound having an Si-F bond, known compounds having an Si-F bond-containing silicon group (hereinafter, sometimes referred to as a fluorosilyl group) can be widely used and without particular limitation, either a low molecular compound or a polymer compound can be used, but a fluorosilyl group-containing organic silicon compound is preferred, and a fluorosilyl group-containing organic polymer is more preferred because of high safety. In addition, from the standpoint that the blend comes to have a low viscosity, a low molecular organic silicon compound having a fluorosilyl group is preferred.

Suitable examples of the (C1) silicon compound having an Si-F bond include, specifically, a compound having a fluorosilyl group represented by the following formula (8) (in the description of the present invention, sometimes referred to as a fluorinated compound), such as fluorosilanes represented by the following formula (7), and a fluorosilyl group-containing organic polymer (in the description of the present invention, sometimes referred to as a fluorinated polymer).

R¹¹_{4-d}SiF_{d} (7)

(in formula (7), each R¹¹ independently represents either a substituted or unsubstituted hydrocarbon group having a carbon number of 1 to 20 or an organosiloxy group represented by R¹²SiO- (wherein each R¹² is independently a substituted or unsubstituted hydrocarbon group having a carbon number of 1 to 20 or a fluorine atom); d is any of 1 to 3, and d is preferably 3; and when a plurality of R¹¹ or R¹² are present, they may be the same or different).

-SiF_{d}R¹¹ₑZ_{f} (8)

(in formula (8), each of R¹¹ and d has the same meaning as in formula (7), each Z is independently a hydroxyl group or a hydrolyzable group except for fluorine, e is any of 0 to 2, f is any of 0 to 2, d+e+f is 3, and when a plurality of R¹¹, R¹² or Z are present, they may be the same or different).

The fluorosilanes represented by formula (7) include known fluorosilanes represented by formula (7) and are not particularly limited but include, for example, fluorotrimethylsilane, fluorotriethylsilane, fluorotripropylsilane, fluorotributylsilane, fluorodimethylvinylsilane, fluorodimethylphenylsilane, fluorodimethylbenzylsilane, fluorodimethyl(3-methylphenyl)silane, fluorodimethyl(4-methylphenyl)silane, fluorodimethyl(4-chlorophenyl)silane, fluorotriphenylsilane, difluorodimethylsilane, difluorodiethylsilane, difluorodibutylsilane, difluoromethylphenylsilane, difluorodiphenylsilane, trifluoroethylsilane, trifluoropropylsilane, trifluorobutylsilane, trifluorophenylsilane, γ-glycidoxypropyltrifluorosilane, γ-glycidoxypropyldifluoromethylsilane, vinyltrifluorosilane, vinyldifluoromethylsilane, γ-methacryloxypropylfluorodimethylsilane, γ-methacryloxypropyldifluoromethylsilane, γ-methacryloxypropyltrifluorosilane, 3-mercaptopropyltrifluorosilane, octadecylfluorodimethylsilane, octadecyldifluoromethylsilane, octadecyltrifluorosilane, 1,3-difluoro-1,1,3,3-tetramethyldisiloxane, 1,3,5,7-tetrafluoro-1,3,5,7-tetrasilatricyclo[3.3.1.1(3,7)]decane, 1,1-difluoro-1-silacyclo-3-pentene, and fluorotris(trimethylsiloxy)silane.

Among these, from the standpoint that the raw material is easily available and the synthesis is easy, fluorodimethylvinylsilane, fluorodimethylphenylsilane, fluorodimethylbenzylsilane, vinyltrifluorosilane, vinyldifluoromethylsilane, γ-methacryloxypropylfluorodimethylsilane, γ-methacryloxypropyldifluoromethylsilane, γ-methacryloxypropyltrifluorosilane, 3-mercaptopropyltrifluorosilane, octadecylfluorodimethylsilane, octadecyldifluoromethylsilane, octadecyltrifluorosilane, 1,3-difluoro-1,1,3,3-tetramethyldisiloxane, etc. are preferred.

In the compound having a fluorosilyl group represented by formula (8), the hydrolyzable group represented by Z in formula (8) includes, for example, the same groups as those for the hydrolyzable group of X in formula (1) but specifically includes a hydrogen atom, a halogen atom except for fluorine, an alkoxy group, an acyloxy group, a ketoximate group, an amino group, an amido group, an acid amido group, an aminooxy group, a mercapto group, and an alkenyloxy group. Among these, a hydrogen atom, an alkoxy group, an acyloxy group, a ketoximate group, an amino group, an amido group, an aminooxy group, a mercapto group and an alkenyloxy group are preferred, and an alkoxy group is more preferred in view of its mild hydrolyzability and the ease of handling.

R¹¹ in formula (8) includes, for example, an alkyl group such as methyl group and ethyl group, a cycloalkyl group such as cyclohexyl group, an aryl group such as phenyl group, an aralkyl group such as benzyl group, and a triorganosiloxy group represented by R¹²SiO-wherein R¹² is a methyl group, a phenyl group, etc. Among these, a methyl group is particularly preferred.

Specific examples of the fluorosilyl group represented by formula (8) include: as a silicon group not having a hydrolyzable group other than fluorine, a silicon group where one fluorine is substituted on the silicon group, such as fluorodimethylsilyl group, fluorodiethylsilyl group, fluorodipropylsilyl group, fluorodiphenylsilyl group and fluorodibenzylsilyl group, a silicon group where two fluorines are substituted on the silicon group, such as difluoromethylsilyl group, difluoroethylsilyl group, difluorophenylsilyl group and difluorobenzylsilyl group, and a silicon group where three fluorines are substituted on the silicon group, i.e., a trifluorosilyl group; and, as a silicon group having both fluorine and other hydrolyzable group, a fluoromethoxymethylsilyl group, a fluoroethoxymethylsilyl group, a fluoromethoxyethylsilyl group, a fluoromethoxyphenylsilyl group, a fluorodimethoxysilyl group, a fluorodiethoxysilyl group, a fluorodipropoxysilyl group, a fluorodiphenoxysilyl group, a fluorobis(2-propenoxy)silyl group, a difluoromethoxysilyl group, a difluoroethoxysilyl group, a difluorophenoxysilyl group, a fluorodichlorosilyl group, and a difluorochlorosilyl group. A silicon group not having a hydrolyzable group other than fluorine, and a fluorosilyl group where R¹¹ is a methyl group, are preferred, and a trifluorosilyl group is more preferred.

Furthermore, in view of ease of synthesis, a fluorodimethylsilyl group, a difluoromethylsilyl group, a trifluorosilyl group, a fluoromethoxymethylsilyl group, a fluoroethoxymethylsilyl group, a fluoromethoxyethylsilyl group, a fluorodimethoxysilyl group, a fluorodiethoxysilyl group, a difluoromethoxysilyl group, and a difluoroethoxysilyl group are more preferred; in view of stability, a silicon group not having a hydrolyzable group other than fluorine, such as fluorodimethylsilyl group, difluoromethylsilyl group and trifluorosilyl group, are still more preferred; in view of high curability, a silicon group where two or three fluorines are substituted on the silicon group, such as difluoromethylsilyl group, difluoromethoxysilyl group, difluoroethoxysilyl group and trifluorosilyl group, is preferred; and a trifluorosilyl group is most preferred.

As the compound having a fluorosilyl group represented by formula (8), without particular limitation, either a monomer compound or a polymer compound may be used, and the compound includes, for example, an inorganic silicon compound such as tetrafluorosilane and octafluorotrisilane; a low molecular organic silicon compound such as fluorosilanes represented by formula (7), fluorotrimethoxysilane, difluorodimethoxysilane, trifluoromethoxysilane, fluorotriethoxysilane, difluorodiethoxysilane, trifluoroethoxysilane, methylfluorodimethoxysilane, methyldifluoromethoxysilane, methyltrifluorosilane, methylfluorodiethoxysilane, methyldifluoroethoxysilane, vinylfluorodimethoxysilane, vinyldifluoromethoxysilane, vinyltrifluorosilane, vinylfluorodiethoxysilane, vinyldifluoroethoxysilane, phenylfluorodimethoxysilane, phenyldifluoromethoxysilane, phenyltrifluorosilane, phenylfluorodiethoxysilane, phenyldifluoroethoxysilane and fluorotrimethylsilane; and a polymer compound such as fluorinated polysiloxane having, at a terminal, a fluorosilyl group represented by formula (8). Fluorosilanes represented by formula (7) and a polymer having a fluorosilyl group represented by formula (8) at a terminal of the main or side chain are preferred.

As for the fluorosilanes represented by formula (7) and the compound having a fluorosilyl group represented by formula (8), a commercially available reagent may be used, or the compound may be synthesized from raw material compounds. The synthesis method is not particularly limited, but a compound obtained by reacting a compound having a hydrolyzable silicon group represented by the following formula (9) and a fluorinating agent by a known method (for example, Organometallics, 1996, 15, page 2478 (Ishikawa, et al.)) is suitably used.

-SiR¹¹₃₋ₚZₚ (9)

(in formula (9), each of R¹¹ and Z has the same meaning as in formula (8), and p is any of 1 to 3).

The hydrolyzable silicon group represented by formula (9) includes, for example, an alkoxysilyl group, a siloxane bond, a halosilyl group such as chlorosilyl group, and a hydrosilyl group.

Specific examples of the fluorinating agent used for fluorination of an alkoxysilyl group include, without particular limitation, NH₄F, Bu₄NF, HF, BF₃, Et₂NSF₃, HSO₃F, SbF₅, VOF₃, and CF₃CHFCF₂NEt₂.

Specific examples of the fluorinating agent used for fluorination of a halosilyl group include, without particular limitation, AgBF₄, SbF₃, ZnF₂, NaF, KF, CsF, NH₄F, CuF₂, NaSiF₆, NaPF₆, NaSbF₆, NaBF₄, Me₃SnF, and KF(HF)_{1.5-5}.

Specific examples of the fluorinating agent used for fluorination of a hydrosilyl group include, without particular limitation, AgF, PF₅, Ph₃CBF₄, SbF₃, NOBF₄, and NO₂BF₄.

A compound having a siloxane bond is cleaved with BF₃, etc., whereby a fluorosilyl group is obtained.

Among the synthesis methods of a fluorosilyl group using such a fluorinating agent, a method of fluorinating an alkoxysilane by using BF₃, and a method of fluorinating chlorosilane by using CuF₂ or ZnF₂ are preferred, because, for example, the reaction is simple and easy, the reaction efficiency is high, and the safety is high.

As for BF₃, a BF₃ gas, a BF₃ ether complex, a BF₃ thioether complex, a BF₃ amine complex, a BF₃ alcohol complex, a BF₃ carboxylic acid complex, a BF₃ phosphoric acid complex, a BF₃ hydrate, a BF₃ piperidine complex, a BF₃ phenol complex, etc. can be used, but in view of ease of handling, a BF₃ ether complex, a BF₃ thioether complex, a BF₃ amine complex, a BF₃ alcohol complex, a BF₃ carboxylic acid complex, and a BF₃ hydrate are preferred. A BF₃ ether complex, a BF₃ alcohol complex and a BF₃ hydrate are more preferred because of their high reactivity, and a BF₃ ether complex is still more preferred.

The fluorosilyl group-containing organic polymer (in the description of the present invention, sometimes referred to as a fluorinated polymer) is not particularly limited as long as it is an organic polymer having an Si-F bond, and known Si-F bond-containing organic polymers can be widely used. The position of the SiF bond in the organic polymer is also not particularly limited, and the bond exerts the effect at any site in the polymer molecule and is expressed in the form of -SiR'₂F when present at a terminal of the main or side chain, or in the form of -SiR'F- or ≡SiF (wherein each R' is independently an arbitrary group) when incorporated into the main chain of the polymer. The organic polymer having an Si-F bond at a terminal of the main or side chain is suitably the above-described polymer having a fluorosilyl group represented by formula (8), and examples of the fluorosilyl group incorporated into the main chain of the polymer include -Si(CH₃)F-, -Si(C₆H₅)F-, -SiF₂-, and =SiF.

The fluorinated polymer may be either a single polymer where the fluorosilyl group and the main chain skeleton are of the same type, i.e., a single polymer where the number of fluorosilyl groups per molecule, the bond position thereof, the number of F contained in the fluorosilyl group and the main chain skeleton are the same, or a mixture of a plurality of polymers where any or all of these are different. In either case where the fluorinated polymer is a single polymer or a mixture of a plurality of polymers, the fluorinated polymer can be suitably used as a resin component of a curable composition exhibiting rapid curability, but in order to obtain a rubbery cured product exerting high curability and exhibiting high strength, high elongation and low elastic modulus, the number of the fluorosilyl groups contained in the fluorinated polymer is, on average, at least 1, preferably from 1.1 to 5, more preferably from 1.2 to 3, per molecule of the polymer. If the number of fluorosilyl groups contained per molecule is less than 1 on average, the curability may be insufficient, and favorable rubber elastic behavior may be less likely to be exhibited. On the other hand, if the number of fluorosilyl groups contained per molecule exceeds 5 on average, the elongation of the rubbery cured product may be reduced. As described above, the fluorosilyl group may be present at a main chain terminal or a side chain terminal of the polymer molecular chain or may be incorporated into the main chain, but in particular, when the group is present at a main chain terminal, the effective network length of the organic polymer component contained in the finally formed cured product becomes long and therefore, a rubbery cured product having high strength and high elongation and exhibiting low elastic modulus is readily obtained. In the case where two or more fluorosilyl groups are present per molecule, respective silicon groups may be the same or different.

In addition, the fluorinated polymer may contain, together with a fluorosilyl group, a substituent other than a fluorosilyl group, such as a silicon group having, as the hydrolyzable group, only a hydrolyzable group except for fluorine (e.g., methyldimethoxysilyl group). Such a fluorinated polymer includes, for example, a polymer in which one main chain terminal is a fluorosilyl group and the other main chain terminal is a silicon group having, as the hydrolyzable group, only a hydrolyzable group except for fluorine.

In the fluorinated polymer, the fluorosilyl group may be introduced using any method, but the method includes an introduction method by a reaction of a fluorosilyl group-containing low molecular silicon compound with a polymer (method (i)), and a method of converting the silicon group of a polymer containing a reactive silicon group having a hydrolyzable group except for fluorine (hereinafter, sometimes referred to as "polymer (X)") into a fluorosilyl group (method (ii)).

Specific examples of the method (i) include the following methods:
(a) a method of reacting a polymer having a functional group such as hydroxyl group, epoxy group or isocyanate group in the molecule, and a compound having a functional group reactive with the functional group above and a fluorosilyl group; including, for example, a method of reacting a polymer having a hydroxyl group at a terminal and isocyanatepropyldifluoromethylsilane, and a method of reacting a polymer having an SiOH group at a terminal and difluorodiethoxysilane;
(b) a method of reacting a polymer containing an unsaturated group in the molecule and a fluorosilyl group-containing hydrosilane to effect hydrosilylation; including, for example, a method of reacting a polymer having an allyl group at a terminal and difluoromethylhydrosilane; and
(c) a method of reacting a polymer containing an unsaturated group and a compound having a mercapto group and a fluorosilyl group; including, for example, a method of reacting a polymer having an allyl group at a terminal and mercaptopropyldifluoromethylsilane.

As the polymer containing a reactive silicon group having a hydrolyzable group except for fluorine (polymer (X)) used in the method (ii), the above-described crosslinkable silicon group-containing organic polymer (A) is suitably used.

In the method (ii), as the method for converting the reactive silicon group having a hydrolyzable group except for fluorine into a fluorosilyl group, a known method may be used, and the method includes, for example, a method of converting the above-described hydrolyzable silicon group represented by formula (9) into a fluorosilyl group by using a fluorinating agent.

The fluorinating agent includes, for example, the above-described fluorinating agents. Among others, a BF₃ ether complex, a BF₃ alcohol complex, and a BF₃ dihydrate are preferred because of high activity, efficient progress of fluorination, no production of a salt, etc. as a by-product, and ease of post-treatment, and a BF₃ ether complex is more preferred.

Although fluorination by a BF₃ ether complex proceeds even without heating, heating is preferably performed so as to allow for more efficient fluorination. The heating temperature is preferably from 50 to 150°C, more preferably from 60 to 130°C. If the heating temperature is less than 50°C, the reaction does not proceed efficiently, and much time may be required for fluorination, whereas if it is more than 150°C, the fluorinated polymer may undergo decomposition. In the fluorination by a BF₃ complex, coloring sometimes occurs depending on the type of the polymer (X) used, and from the standpoint of suppressing the coloring, a BF₃ alcohol complex or a BF₃ dihydrate is preferably used.

The fluorinating agent used for the production of the fluorinated polymer is likely to act also as a curing catalyst for the fluorinated polymer, and when moisture is present at the time of producing the fluorinated polymer by the method (ii) above, a silanol condensation reaction may proceed, leading to a rise in the viscosity of the fluorinated polymer obtained. Therefore, the production of the fluorinated polymer is preferably performed in an environment with as little moisture as possible, and a dehydration operation of, for example, subjecting the polymer (X) to be fluorinated to azeotropic dehydration using toluene, hexane, etc. is preferably performed before fluorination. However, in the case of using a BF₃ amine complex, there is a tendency that fluorination hardly proceeds after the dehydration operation and the reactivity is enhanced by the addition of a slight amount of water, and therefore, water is preferably added in an allowable range for the viscosity rise. In addition, in view of stability of the fluorinated polymer, the fluorinating agent and the fluorinating agent-derived components generated as by-products are preferably removed by filtration, decantation, liquid separation, devolatilization under reduced pressure, etc. after the fluorination. In the case of producing the fluorinated polymer by using the above-described BF₃-based fluorinating agent, the amount of BF₃ remaining in the fluorinated polymer produced and the BF₃-derived components produced in the reaction is, in terms of the amount of B, preferably less than 500 ppm, more preferably less than 100 ppm, still more preferably less than 50 ppm. By removing BF₃ and BF₃-derived components, a viscosity rise, etc. of the resulting fluorinated polymer itself as well as the mixture of the fluorinated polymer and the polymer (X) can be suppressed. In this respect, a fluorination method using a BF₃ ether complex or a BF₃ alcohol complex is preferred, because the boron component can be relatively easily removed by vacuum devolatilization, and a method using a BF₃ ether complex is more preferred.

Here, in the case where the polymer (X) has two or more hydrolyzable groups except for fluorine, the hydrolyzable groups may be all fluorinated or may be partially fluorinated by adjusting the fluorination conditions by a method of, e.g., decreasing the amount of the fluorinating agent. For example, in the case of producing the fluorinated polymer by using the polymer (X) in the method (ii) above, the amount of the fluorinating agent used is not particularly limited and may be sufficient if the molar amount of the fluorine atom in the fluorinating agent is equimolar to or greater than the molar amount of the polymer (X). In the case of fluorinating all hydrolyzable groups contained in the polymer (X) by the method (ii), it is preferable to use the fluorinating agent in such an amount that the molar amount of the fluorine atom in the fluorinating agent becomes equimolar to or greater than the total molar amount of hydrolyzable groups in the reactive silicon group contained in the polymer (X). The "fluorine atom in the fluorinating agent" as used herein indicates a fluorine atom effective for fluorination in the fluorinating agent, specifically, a fluorine atom capable of substituting for the hydrolyzable group in the reactive silicon group of the polymer (X).

The low molecular compound having a fluorosilyl group in the method (i) can also be synthesized from a general-purpose reactive silicon group-containing low molecular compound by using the above-described fluorination method.

In the method (i), a reactive group for reacting the polymer and the silicon-containing low molecular compound is present together with the fluorosilyl group and may complicate the reaction, and in such a case, the fluorinated polymer is preferably obtained by the method (ii).

The glass transition temperature of the fluorinated polymer is not particularly limited but is preferably 20°C or less, more preferably 0°C or less, still more preferably -20°C or less. If the glass transition temperature exceeds 20°C, the viscosity may become high in the winter season or in a cold region, leading to difficult handling, and when used as a curable composition, the flexibility of the cured product obtained may decrease to deteriorate the elongation. The glass transition temperature can be determined by DSC measurement.

The fluorinated polymer may be linear or branched. The number average molecular weight of the fluorinated polymer is, in terms of polystyrene in GPC, preferably from 3,000 to 100,000, more preferably from 3,000 to 50,000, still more preferably from 3,000 to 30,000. If the number average molecular weight is less than 3,000, the cured product is likely to exhibit inadequate elongation properties, and if the number average molecular weight exceeds 100,000, there is a disadvantageous tendency with respect to the workability due to high viscosity.

The blending ratio of the (C1) silicon compound having an Si-F bond is not particularly limited, but in the case where a polymer compound having a number average molecular weight of 3,000 or more, such as fluorinated polymer, is used as the component (C1), the blending ratio is preferably from 0.2 to 80 parts by mass, more preferably from 0.3 to 30 parts by mass, still more preferably from 0.5 to 20 parts by mass, per 100 parts by mass of the crosslinkable silicon group-containing organic polymer (A). In the case where a fluorosilyl group-containing low molecular compound (for example, fluorosilanes represented by formula (7), a low molecular organic silicon compound having a fluorosilyl group represented by formula (8), or a fluorosilyl group-containing inorganic silicon compound) having a number average molecular weight of less than 3,000 is used as the component (C1), the blending ratio is preferably from 0.01 to 10 parts by mass, more preferably from 0.05 to 5 parts by mass, per 100 parts by mass of the crosslinkable silicon group-containing organic polymer (A).

In the photocurable composition of the present invention, the blending ratio between the photobase generator (B) used as a curing catalyst and the Si-F bond-containing silicon compound (C1) is, in terms of mass ratio of (B):(C1), preferably from 1:0.008 to 1:300, more preferably from 1:0.016 to 1:40.

In the present invention, the (C2) one or more fluorine-based compounds selected from the group consisting of boron trifluoride, a boron trifluoride complex, a fluorinating agent, and an alkali metal salt of a polyfluoro compound become a compound for accelerating a hydrolysis-condensation reaction of the crosslinkable silicon group and act as a curing catalyst for the crosslinkable silicon group-containing organic polymer (A).

The boron trifluoride complex includes, for example, an amine complex, an alcohol complex, an ether complex, a thiol complex, a sulfide complex, a carboxylic acid complex, and a water complex, of boron trifluoride. Among these complexes of boron trifluoride, an amine complex having both stability and catalytic activity is particularly preferred.

The amine compound used in the amine complex of boron trifluoride includes, for example, ammonia, monoethylamine, triethylamine, piperidine, aniline, morpholine, cyclohexylamine, n-buthylamine, monoethanolamine, diethanolamine, triethanolamine, guanidine, 2,2,6,6-tetramethylpiperidine, 1,2,2,6,6-pentamethylpiperidine, N-methyl-3,3'-iminobis(propylamine), ethylenediamine, diethylenetriamine, triethylenediamine, pentaethylenediamine, 1,2-diaminopropane, 1,3-diaminopropane, 1,2-diaminobutane, 1,4-diaminobutane, 1,9-diaminononane, ATU (3,9-bis(3-aminopropyl)-2,4,8,10-tetraoxaspiro[5.5]undecane), CTU guanamine, dodecanoic acid dihydrazide, hexamethylenediamine, m-xylylenediamine, dianisidine, 4,4'-diamono-3,3'-diethyldiphenylmethane, diaminodiphenylether, 3,3'-dimethyl-4,4'-diaminodiphenylmethane, tolidine base, m-toluoylenediamine, o-phenylenediamine, m-phenylenediamine, p-phenylenediamine, melamine, 1,3-diphenylguanidine, di-o-tolylguanidine, 1,1,3,3 -tetramethylguanidine, bis(aminopropyl)piperazine, N-(3-aminopropyl)-1,3-propanediamine, bis(3-aminopropyl)ether, a compound having a plurality of primary amino groups, such as Jeffamine produced by Sun Technochemicals Co., Ltd., a compound having a plurality of secondary amino groups, such as piperazine, cis-2,6-dimethylpiperazine, cis-2,5-dimethylpiperazine, 2-methylpiperazine, N,N'-di-tert-butylethylenediamine, 2-aminomethylpiperidine, 4-aminomethylpiperidine, 1,3-di-(4-piperidyl)-propane, 4-aminopropylaniline, homopiperazine, N,N'-diphenylthiourea, N,N'-diethylthiourea and N-methyl-1,3-propanediamine, methylaminopropylamine, ethylaminopropylamine, ethylaminoethylamine, laurylaminopropylamine, 2-hydroxyethylaminopropylamine, 1-(2-aminoethyl)piperazine, N-aminopropylpiperazine, 3-aminopyrrolidine, 1-o-tolylbiguanide, 2-aminomethylpiperazine, N-aminopropylaniline, ethylamine ethylamine, 2-hydroxyethylaminopropylamine, laurylaminopropylamine, 2-aminomethylpiperizine, 4-aminomethylpiperizine, a compound represented by the formula H₂N(C₂H₄NH)ₙH (n=about 5) (trade name: Poly-8, produced by Tosoh Corporation), N-alkylmorpholine, a bicyclic tertiary amine compound such as 1,8-diazabicyclo[5.4.0]undecene-7, 6-dibutylamino-1,8-diazabicyclo[5.4.0]undecene-7, 1,5-diazabicyclo[4.3.0]nonene-5, 1,4-diazabicyclo[2.2.2]octane, pyridine, N-alkylpiperizine, 1,5,7-triazabicyclo[4.4.0]dec-5-ene and 7-methyl-1,5,7-triazabicyclo[4.4.0]dec-5-ene, and an aminosilane compound such as γ-aminopropyltriethoxysilane, γ-aminopropylmethyldiethoxysilane, 4-amino-3-dimethylbutyltriethoxysilane, N-β(aminoethyl)-γ-aminopropyltriethoxysilane, N-β(aminoethyl)-γ-aminopropylmethyldiethoxysilane, N-3-[amino(dipropyleneoxy)]aminopropyltoriethoxysilane, (aminoethylaminomethyl)phenethyltriethoxysilane, N-(6-aminohexyl)aminopropyltriethoxysilane, N-phenyl-γ-aminopropyltriethoxysilane and N-(2-aminoethyl)-11-aminoundecyltriethoxysilane.

The commercial product of the amine complex of boron trifluoride includes, for example, Anchor 1040, Anchor 1115, Anchor 1170, Anchor 1222 and BAK1171 produced by Air Products Japan, Inc.

The fluorinating agent includes a nucleophilic fluorinating agent having a fluorine anion as an active species, and an electrophilic fluorinating agent having an electron-deficient fluorine atom as an active species.

The nucleophilic fluorinating agent includes, for example, a 1,1,2,3,3,3-hexafluoro-1-dialkylaminopropane-based compound such as 1,1,2,3,3,3-hexafluoro-1-diethylaminopropane, a trialkylaminetrishydrofluoride-based compound such as triethylaminetrishydrofluoride, and a dialkylaminosulfurtrifluoride-based compound such as diethylaminosulfurtrifluoride.

The electrophilic fluorinating agent includes, for example, an N-fluoropyridinium salt-based compound such as N,N'-difluoro-2,2'-bipyridinium bis(tetrafluoroborate) and N-fluoropyridinium trifluoromethanesulfonate, a 4-fluoro-1,4-diazoniabicyclo[2.2.2]octane-based compound such as 4-fluoro-1,4-diazoniabicyclo[2.2.2]octane bis(tetrafluoroborate), and an N-fluorobis(sulfonyl)amine-based compound such as N-fluorobis(phenylsulfonyl)amine. Among these, a 1,1,2,3,3,3-hexafluoro-1-diethylaminopropane-based compound is preferred, because this is a liquid compound and is easily available.

The alkali metal salt of polyfluoro compound includes, for example, sodium hexafluoroantimonate, potassium hexafluoroantimonate, sodium hexafluoroarsenate, potassium hexafluoroarsenate, lithium hexafluorophosphate, sodium hexafluorophosphate, potassium hexafluorophosphate, sodium pentafluorohydroxoantimonate, potassium pentafluorohydroxoantimonate, lithium tetrafluoroborate, sodium tetrafluoroborate, potassium tetrafluoroborate, sodium tetrakis(trifluoromethylphenyl)borate, sodium trifluoro(pentafluorophenyl)borate, potassium trifluoro(pentafluorophenyl)borate, sodium difluorobis(pentafluorophenyl)borate, and potassium difluorobis(pentafluorophenyl)borate.

Among these, the polyfluoro compound component in the alkali metal salt of polyfluoro compound is preferably a tetrafluoroboric acid or a hexafluorophosphoric acid. In addition, the alkali metal in the alkali metal salt of polyfluoro compound is preferably one or more alkali metals selected from the group consisting of lithium, sodium and potassium.

The blending ratio of the fluorine-based compound (C2) is not particularly limited but is preferably from 0.001 to 10 parts by mass, more preferably from 0.001 to 5 parts by mass, still more preferably from 0.001 to 2 parts by mass, per 100 parts by mass of the crosslinkable silicon group-containing organic polymer (A). These fluorine-based compounds may be used individually, or two or more thereof may be used in combination.

The photocurable composition of the present invention preferably further contains (D) a silane coupling agent. By blending the silane coupling agent (D), the adhesiveness to a general adherend such as metal, plastic and glass can be enhanced.

The silane coupling agent (D) includes, but is not limited to, for example, amino group-containing silanes such as γ-aminopropyltrimethoxysilane, γ-aminopropyltriethoxysilane, γ-aminopropyldimethoxysilane, N-(β-aminoethyl)-γ-aminopropyltrimethoxysilane, N-(β-aminoethyl)-γ-aminopropyltriethoxysilane, N-(β-aminoethyl)-γ-aminopropylmethyldimethoxysilane and 1,3-diaminoisopropyltrimethoxysilane; ketimine-type silanes such as N-(1,3-dimethylbutylidene)-3-(triethoxysilyl)-1-propaneamine and N-(1,3-dimethylbutylidene)-3-(trimethoxysilyl)-1-propaneamine; epoxy group-containing silanes such as γ-glycidoxypropyltrimethoxysilane, γ-glycidoxypropyltriethoxysilane, γ-glycidoxypropylmethyldimethoxysilane and β-(3,4-epoxycyclohexyl)ethyltrimethoxysilane; mercapto group-containing silanes such as γ-mercaptopropyltrimethoxysilane and γ-mercaptopropylmethyldimethoxysilane; vinyl-type unsaturated group-containing silanes such as vinyltrimethoxysilane, vinyltriethoxysilane, γ-methacryloyloxypropyltrimethoxysilane and γ-acryloyloxypropylmethyldimethoxysilane; chlorine atom-containing silanes such as γ-chloropropyltrimethoxysilane; isocyanate-containing silanes such as γ-isocyanatopropyltriethoxysilane and γ-isocyanatopropylmethyldimethoxysilane; alkylsilanes such as hexyltrimethoxysilane, hexyltriethoxysilane and decyltrimethoxysilane; and phenyl group-containing silanes such as phenyltrimethoxysilane, phenyltriethoxysilane, diphenyldimethoxysilane and diphenyldiethoxysilane. In addition, modified amino group-containing silanes obtained by reacting the above-described amino group-containing silanes and an epoxy group-containing, isocyanate group-containing or (meth)acryloyl group-containing compound containing the silanes above to modify the amino group may also be used.

The blending ratio of the silane coupling agent (D) is not particularly limited but is preferably from 0.2 to 20 parts by mass, more preferably from 0.3 to 10 parts by mass, still more preferably from 0.5 to 5 parts by mass, per 100 parts by mass of the crosslinkable silicon group-containing organic polymer (A). These silane coupling agents may be used individually, or two or more thereof may be used in combination.

In the photocurable composition, various additives such as photosensitizer, extender, plasticizer, moisture absorber, curing catalyst, physical property adjustor for improving tensile property, etc., reinforcing agent, coloring agent, flame retardant, sagging inhibitor, antioxidant, anti-aging agent, ultraviolet absorber, solvent, fragrance, pigment and dye may be added, if desired.

The photosensitizer is preferably a carbonyl compound having a triplet energy of 225-310 kJ/mol, and examples thereof include xanthone, thioxanthone, 2-chlorothioxanthone, 2,4-dimethylthioxanthone, 2,4-diethylthioxanthone, 2,4-diisopropylthioxanthone, isopropylthioxanthone, phthalimide, anthraquinone, 9,10-dibutoxyanthracene, acetophenone, propiophenone, benzophenone, acylnaphthalene, 2-(acylmethylene)thiazoline, 3-acylcoumarin, 3,3'-carbonylbiscoumarin, perylene, coronene, tetracene, benzanthracene, phenothiazine, flavin, acridine, and ketocoumarin. Thioxanthone, 3-acylcoumarin and 2-(aroylmethylene)-thiazoline are preferred, and thioxanthone and 3-acylcoumarin are more preferred. Such a sensitizer increases the reactivity of an amine base without reducing the storage life of the composition.

The photosensitizer is more preferably an energy ray cleavage-type radical generator that is a photoradical generator of a type of generating a radical resulting from cleavage of the compound upon irradiation with an energy ray such as light. When the energy ray cleavage-type radical generator is used, the photocurable composition of the present invention exhibits a remarkably high curing speed, compared with a case of using a photosensitizer such as benzophenones or thioxanthones known as a sensitizer of a photobase initiator, and can be cured immediately after the irradiation with an energy ray.

The energy ray cleavage-type radical generator includes, for example, aryl alkyl ketones such as benzoin ether derivative and acetophenone derivative, oxime ketones, acylphosphine oxides, S-phenyl thiobenzoates, titanocenes, and derivatives obtained by increasing the molecular weight thereof. Commercially available cleavage-type radical generators include, for example, 1-(4-dodecylbenzoyl)-1-hydroxy-1-methylethane, 1-(4-isopropylbenzoyl)-1-hydroxy-1-methylethane, 1-benzoyl-1-hydroxy-1-methylethane, 1-[4-(2-hydroxyethoxy)-benzoyl]-1-hydroxy-1-methylethane, 1-[4-(acryloyloxyethoxy)-benzoyl]-1-hydroxy-1-methylethane, diphenyl ketone, phenyl-1-hydroxycyclohexyl ketone, benzyl dimethyl ketal, bis(cyclopentadienyl)-bis(2,6-difluoro-3-pyrryl-phenyl)titanium, (η⁶-isopropylbenzene)-(η⁵-cyclopentadienyl)-iron(II) hexafluorophosphate, trimethylbenzoyldiphenylphosphine oxide, bis(2,6-dimethoxy-benzoyl)-(2,4,4-trimethyl-pentyl)-phosphine oxide, bis(2,4,6-trimethylbenzoyl)-2,4-dipentoxyphenylphosphine oxide, and bis(2,4,6-trimethylbenzoyl)phenyl-phosphine oxide.

The blending ratio of the photosensitizer is not particularly limited but is preferably from 0.01 to 5 mass%, more preferably from 0.025 to 2 mass%, based on the composition. These photo sensitizers may be used individually, or two or more thereof may be used in combination.

The extender includes, for example, talc, clay, calcium carbonate, magnesium carbonate, anhydrous silicon, hydrous silicon, calcium silicate, titanium dioxide, and carbon black. These may be used individually, or two or more thereof may be used in combination.

The plasticizer includes, for example, phosphoric acid esters such as tributyl phosphate and tricresyl phosphate, phthalic acid esters such as dioctyl phthalate, aliphatic monobasic acid esters such as glycerin monooleate, aliphatic dibasic acid esters such as dioctyl adipate, and polypropylene glycols. These may be used individually, or two or more thereof may be used in combination.

As the moisture absorber, the above-described silane coupling agent or a silicate is suitable. The silicate is not particularly limited and includes, for example, a tetraalkoxysilane or a partial hydrolysis condensate thereof. More specifically, the silicate includes a tetraalkoxysilane (tetraalkyl silicate) such as tetramethoxysilane, tetraethoxysilane, ethoxytrimethoxysilane, dimethoxydiethoxysilane, methoxytriethoxysilane, tetra-n-propoxysilane, tetra-i-propoxysilane, tetra-n-butoxysilane, tetra-i-butoxysilane and tetra-tert-butoxysilane, and a partial hydrolysis condensate thereof.

As the curing catalyst, known curing catalysts can be widely used, and the curing catalyst is not particularly limited but includes an organic metal compound, amines, etc. In particular, it is preferable to use a silanol condensation catalyst. The silanol condensation catalyst includes, for example, an organotin compound such as stannous octoate, dibutyltin dioctoate, dibutyltin dilaurate, dibutyltin maleate, dibutyltin diacetate, dibutyltin diacetylacetonate, dibutyltin oxide, dibutyltin bistriethoxysilicate, dibutyltin distearate, dioctyltin dilaurate, dioctyltin diversatate, tin octylate and tin naphthenate; a dialkyltin oxide such as dimethyltin oxide, dibutyltin oxide and dioctyltin oxide; a reaction product of dibutyltin oxide with a phthalic acid ester; titanic acid esters such as tetrabutyl titanate and tetrapropyl titanate; organoaluminum compounds such as aluminum trisacetylacetonate, aluminum trisethylacetoacetate and diisopropoxy aluminum ethylacetoacetate; chelate compounds such as zirconium tetraacetylacetonate and titanium tetraacetylacetonate; an organic acid lead such as lead octylate and lead naphthenate; an organic acid bismuth such as bismuth octylate, bismuth neodecanoate and bismuth resinate; and other acidic catalysts and basic catalysts known as a silanol condensation catalyst. However, the obtained photocurable composition becomes highly toxic according to the amount of the organotin compound added.

The method for producing the photocurable composition of the present invention is not particularly limited, and the composition can be produced, for example, by blending predetermined amounts of the components (A), (B) and (C1) and/or (C2), blending other compounding substances, if desired, and degassing and stirring the blend. The order of blending respective components and other compounding substances is not particularly limited and may be appropriately determined.

The photocurable composition of the present invention may take the form of a one-pack composition or a two-pack composition, as needed, but can be suitably used as a one-pack composition. The photocurable composition of the present invention is a photocurable composition that is cured by light irradiation, and the composition can be cured at ordinary temperature (for example, 23°C) and is suitably used as a curable composition of ordinary temperature-curable type, but, if desired, the curing may be appropriately accelerated by heating.

The production method of a cured product of the present invention is characterized by irradiating the photocurable composition of the present invention with light to form a cured product. The cured product of the present invention is a cured product formed by the method above.

In addition, the method for producing a product of the present invention is characterized by producing a product by using the photocurable composition of the present invention. The product of the present invention is a product produced using the method above and is suitably usable for an electronic circuit, an electronic component, a building material, an automobile, etc.

The conditions when irradiating the photocurable composition of the present invention with light are not particularly limited, and in the case of irradiation with an active energy ray at the time of curing, a light ray such as ultraviolet ray, visible ray and infrared ray, an electromagnetic wave such as X-ray and γ ray, an electron beam, a proton beam, a neutron beam, etc. can be used as the active energy ray, but in view of, for example, curing rate, easy availability of the irradiation apparatus, cost thereof and ease of handling under sunlight or general illumination, curing by irradiation with an electron beam is preferred, and curing by irradiation with an ultraviolet ray is more preferred. Here, the ultraviolet ray encompasses g-line (wavelength: 436 nm), h-line (wavelength: 405 nm), i-line (wavelength: 365 nm), etc. The source of the active energy ray is not particularly limited but according to the property of the photobase generator used, the source includes, for example, a high-pressure mercury lamp, a low-pressure mercury lamp, an electron beam irradiation apparatus, a halogen lamp, a light-emitting diode, a semiconductor laser, and a metal halide.

The irradiation energy is, for example, in the case of an ultraviolet ray, preferably from 10 to 20,000 mJ/cm², more preferably from 50 to 10,000 mJ/cm². If the irradiation energy is less than 10 mJ/cm², the curability may be insufficient, and if it exceeds 20,000 mJ/cm², over-exposure to light not only wastes time and cost but also sometimes damages the base material.

The method for coating an adherend with the photocurable composition of the present invention is not particularly limited, but a coating method such as screen printing, stencil printing, roll printing or spin coating is suitably used.

Furthermore, in the present invention, the timing of applying the photocurable composition to an adherend and irradiating it with light is not limited as well, and the photocurable composition may be irradiated with light and then joined with an adherend to produce a product, or the photocurable composition may be applied to an adherend and irradiated with light to thereby cure the composition and produce a product.

The photocurable composition of the present invention is a rapid-curing photocurable composition with excellent workability and is useful particularly as a tacky/adhesive composition, and the composition can be suitably used as an adhesive, a sealing material, a tacky material, a coating material, a potting material, a paint, a putty material, a primer, etc. The photo curable composition of the present invention is suitably usable for applications, for example, a coating material used for, e.g., coating aimed at moisture-proofing or electrical insulation of a mounting circuit board, etc. or coating of a panel for solar power generation or an outer peripheral portion of the panel; an architectural or industrial sealant such as sealant for a double glazing and sealant for a vehicle; an electric/electronic part material such as solar cell rear face sealant; an electrically insulating material such as insulating coating material for electric wires/cables; a pressure-sensitive adhesive; an adhesive; an elastic adhesive; and a contact-type adhesive.

### Examples

The present invention is described more specifically below by referring to Examples, but these Examples are for exemplary purposes and of course should not be construed as limiting.

### (Synthesis Example 1)

### Synthesis of Fluorosilyl Group-Containing Polyoxyalkylene-Based Polymer C1-1 (Fluorinated Polymer C1-1):

In a flask equipped with a stirring device, a nitrogen gas introduction tube, a thermometer and a reflux condenser, propylene oxide was reacted using ethylene glycol as an initiator in the presence of a zinc hexacyanocobaltate-glyme complex catalyst to obtain polyoxypropylene diol having a weight average molecular weight in terms of hydroxyl value of 11,000 and a molecular weight distribution of 1.3. A methanol solution of sodium methoxide was added to the polyoxypropylene diol obtained, and methanol was removed by distillation under heating and reduced pressure to convert a terminal hydroxyl group of polyoxypropylene diol into sodium alkoxide and thereby obtain Polyoxyalkylene-Based Polymer M1.

Next, allyl chloride was reacted with Polyoxyalkylene-Based Polymer M1 in the blending ratio shown in Table 1, and the reaction product was purified by removing unreacted allyl chloride to obtain a polyoxyalkylene-based polymer having an allyl group at a terminal. This polyoxyalkylene-based polymer having an allyl group at a terminal was reacted with trimethoxysilane as a silicon hydride compound by adding 150 ppm of an isopropanol solution of platinum-vinylsiloxane complex having a platinum content of 3 wt% to obtain Polyoxyalkylene-Based Polymer A1 having a trimethoxysilyl group at a terminal.

The molecular weight of Polyoxyalkylene-Based Polymer A1 having a trimethoxysilyl group at a terminal was measured by GPC, as a result, the peak top molecular weight was 12,000 and the molecular weight distribution was 1.3. The number of terminal trimethoxysilyl groups per molecule as determined by 1H-NMR measurement was 1.7.

**Table 1**

| Synthesis Example No. | 1 | 6 |
|---|---|---|
| Polymer obtained | A1 | A5 |
| Polyoxyalkylene-Based Polymer M1 | 100.00 | - |
| Polyoxyalkylene-Based Polymer M5 | - | 100.00 |
| Allyl chloride | 1.53 | 1.60 |
| Trimethoxysilane | 2.44 | - |
| Methyldimethoxysilane | - | 1.80 |

In Table 1, the blending amount of each compounding substance is expressed in g, Polyoxyalkylene-Based Polymer M1 is Polyoxyalkylene-Based Polymer M1 obtained in Synthesis Example 1, and Polyoxyalkylene-Based Polymer M5 is Polyoxyalkylene-Based Polymer M5 obtained in Synthesis Example 6.

In a flask equipped with a stirring device, a nitrogen gas introduction tube, a thermometer and a reflux condenser, after degassing under reduced pressure and replacement with nitrogen gas, a BF₃ diethyl ether complex (produced by Tokyo Chemical Industry Co., Ltd.) was added under nitrogen stream in the blending ratio shown in Table 2 and heated at 50°C. Subsequently, dehydrated methanol was slowly added dropwise and mixed to obtain a mixture.

In a new flask equipped with a stirring device, a nitrogen gas introduction tube, a thermometer and a reflux condenser, Polyoxyalkylene-Based Polymer A1 having a trimethoxysilyl group at a terminal obtained in Synthesis Example 1 and toluene were added in the blending ratio shown in Table 2, and the contents were stirred at 23°C for 30 minutes, then heated at 110°C and stirred under reduced pressure for 2 hours to remove toluene. To this vessel, the mixture obtained above was slowly added dropwise under nitrogen stream, and after the completion of dropwise addition, the reaction temperature was raised to 120°C, followed by reaction for 30 minutes. After the completion of reaction, unreacted materials were removed by degassing under reduced pressure to obtain Polyoxyalkylene-Based Polymer C1-1 having a trifluorosilyl group at a terminal (hereinafter, referred to as Fluorinated Polymer C1-1).

The 1H-NMR spectrum of Fluorinated Polymer C-1 was measured (measured in a CDCl₃ solvent by using NMR400 manufactured by Shimadzu Corporation), as a result, while the peak (m, 0.63 ppm) corresponding to silylmethylene (-CH₂-Si) of Polymer A1 as the raw material disappeared, a broad peak appeared on the low magnetic field side (0.7 ppm or more).

**Table 2**

| Synthesis Example No. | 1 | 7 |
|---|---|---|
| Fluorinated polymer obtained | C1-1 | C1-3 |
| Polyoxyalkylene-Based Polymer A1 | 100.00 | - |
| Polyoxyalkylene-Based Polymer A5 | - | 100.00 |
| Toluene | 5.00 | 5.00 |
| BF₃ Diethyl ether complex | 2.40 | 2.40 |
| Dehydrated methanol | 1.60 | 1.60 |

In Table 2, the blending amount of each compounding substance is expressed in g, Polyoxyalkylene-Based Polymer A1 is Polyoxyalkylene-Based Polymer A1 obtained in Synthesis Example 1, and Polyoxyalkylene-Based Polymer A5 is Polyoxyalkylene-Based Polymer A5 obtained in Synthesis Example 6.

### (Synthesis Example 2)

40 Parts by mass of ethyl acetate as a solvent, 59 parts by mass of methyl methacrylate, 25 parts by mass of 2-ethylhexyl methacrylate, 22 parts by mass of γ-methacryloxypropyltrimethoxysilane and 0.1 parts by mass of ruthenocene dichloride as a metal catalyst were charged into a flask and heated at 80°C while introducing a nitrogen gas. Subsequently, 8 parts by mass of 3-mercaptopropyltrimethoxysilane was added to the flask, and the reaction was allowed to proceed at 80°C for 6 hours. After cooling to room temperature, 20 parts by mass of a benzoquinone solution (95% THF solution) was added to stop the polymerization, and the solvent and unreacted materials were removed by distillation to obtain Acrylic Polymer A2 having a trimethoxysilyl group, which had a mass average molecular weight in terms of polystyrene of about 6,000, Mw/Mn of 1.6 and Tg of 61.2°C.

### (Synthesis Example 3)

In a flask equipped with a stirring device, a nitrogen gas introduction tube, a thermometer and a reflux condenser, 0.1 g of a BF₃ diethyl ether complex (produced by Tokyo Chemical Industry Co., Ltd.) and 0.10 g of vinyltrimethoxysilane (trade name: KBM-1003, produced by Shin-Etsu Chemical Co., Ltd.) were added under nitrogen stream, stirred at 23°C for 30 minutes and after nitrogen purging, left standing at 50°C for 24 hours to obtain a γ-glycidoxypropyltrimethoxysilane-containing reaction product (hereinafter, referred to as Fluorinated Compound C1-2).

### (Synthesis Example 4)

A methanol solution of sodium methoxide (NaOMe) was added to polyoxypropylene diol and after removing methanol by distillation, allyl chloride was further added to convert the hydroxyl group at a terminal into an allyl group. Unreacted allyl chloride was removed by devolatilization under reduced pressure, and the produced metal salt was removed by extraction with water to obtain polyoxypropylene having an allyl group at terminal. An isopropanol solution of platinum vinylsiloxane complex was added to the allyl group-terminated polyoxypropylene obtained, and trimethoxysilane was reacted with the polymer to obtain Polyalkylene-Based Polymer A3 having a number average molecular weight in terms of PPG of about 15,000 and 1.5 terminal trimethoxysilyl groups per molecule.

### (Synthesis Example 5)

### Synthesis of poly(n-butyl acrylate) having a halogen at a terminal (atom transfer radical polymerization method):

A 50-ml flask was charged with 0.63 g (4.4 mmol) of cuprous bromide, 0.76 g (4.4 mmol) of pentamethyldiethylenetriamine, 5 ml of acetonitrile, 1.6 g (4.4 mmol) of diethyl 2,5-dibromoadipate, and 44.7 g (349 mmol) of n-butyl acrylate and after freeze-degassing, a reaction was allowed to proceed at 70°C for 7 hours in a nitrogen atmosphere. The reaction product was purified by passing it through an active alumina column and thereby removing the copper catalyst to obtain a poly(n-butyl acrylate) having a Br group at a terminal. The number average molecular weight of the obtained polymer was 10,700, and the molecular weight distribution was 1.15.

### Synthesis of poly(n-butyl acrylate) having an alkenyl group at a terminal:

In a nitrogen atmosphere, a 200-ml flask was charged with 35 g of the poly(n-butyl acrylate) having a Br group at a terminal obtained above, 2.2 g (16.1 mmol) of potassium pentenoate, and 35 mL of DMAc, and a reaction was allowed to proceed at 70°C for 4 hours. Unreacted potassium pentenoate and produced potassium bromide in the reaction mixture were removed by water extraction and purification to obtain a poly(n-butyl acrylate) having an alkenyl group at a terminal. The number average molecular weight of the obtained polymer was 11,300, and the molecular weight distribution was 1.12. In addition, the number of alkenyl groups per molecule of the polymer as determined by 1H-NMR analysis was 1.82.

### Synthesis of poly(n-butyl acrylate) having a methyldimethoxysilyl group at a terminal:

A 200-mL pressure-resistant reaction tube was charged with 15 g of the poly(n-butyl acrylate) having an alkenyl group at a terminal obtained above, 1.8 mL (14.5 mmol) of methyldimethoxysilane, 0.26 mL (2.4 mmol) of methyl ortho-formate, and 10.4 mmol of platinum-bis(divinyltetramethyldisiloxane), and a reaction was allowed to proceed at 100°C for 4 hours and thereby obtain Poly(n-Butyl Acrylate) A4 having a methyldimethoxysilyl group at a terminal (hereinafter, referred to as Acrylic-based Polymer A4). The viscosity of the obtained polymer was 44 Pa•s, the number average molecular weight was 11,900, and the molecular weight distribution was 1.12. In addition, the number of methyldimethoxysilyl groups per molecule of the polymer as determined by 1H-NMR analysis was 1.46.

### (Synthesis Example 6)

In a new flask equipped with a stirring device, a nitrogen gas introduction tube, a thermometer and a reflux condenser, propylene oxide was reacted using, as an initiator, polyoxypropylene diol having a molecular weight of about 2,000 in the presence of a zinc hexacyanocobaltate-glyme complex catalyst to obtain polyoxypropylene diol having a molecular weight in terms of hydroxyl value of 14,500 and a molecular weight distribution of 1.3. A methanol solution of sodium methoxide was added to the polyoxypropylene diol obtained, and methanol was removed by distillation under heating and reduced pressure to convert a terminal hydroxyl group of polyoxypropylene diol into sodium alkoxide and thereby obtain Polyoxyalkylene-Based Polymer M5.

Next, allyl chloride was reacted with Polyoxyalkylene-Based Polymer M5 in the blending ratio shown in Table 1, and the reaction product was purified by removing unreacted allyl chloride to obtain a polyoxyalkylene-based polymer having an allyl group at a terminal. This polyoxyalkylene-based polymer having an allyl group at a terminal was reacted with methyldimethoxysilane as a silicon hydride compound by adding 150 ppm of an isopropanol solution of platinum-vinylsiloxane complex having a platinum content of 3 wt% to obtain Polyoxyalkylene-Based Polymer A5 having a methyldimethoxysilyl group at a terminal.

The molecular weight of Polyoxyalkylene-Based Polymer A5 having a methyldimethoxysilyl group at a terminal was measured by GPC, as a result, the peak top molecular weight was 15,000 and the molecular weight distribution was 1.3. The number of terminal methyldimethoxysilyl groups per molecule as determined by 1H-NMR measurement was 1.7.

### (Synthesis Example 7)

In a flask equipped with a stirring device, a nitrogen gas introduction tube, a thermometer and a reflux condenser, after degassing under reduced pressure and replacement with nitrogen gas, 2.4 g of a BF₃ diethyl ether complex was added under nitrogen stream as shown in Table 2 and heated at 50°C. Subsequently, a mixture of 1.6 g of dehydrated methanol was slowly added dropwise and mixed. In a new flask equipped with a stirring device, a nitrogen gas introduction tube, a thermometer and a reflux condenser, 100 g of Polymer A5 obtained in Synthesis Example 6 and 5 g of toluene were added, and the contents were stirred at 23°C for 30 minutes, then heated at 110°C and stirred under reduced pressure for 2 hours to remove toluene. To this vessel, 4.0 g of the mixture obtained above was slowly added dropwise under nitrogen stream, and after the completion of dropwise addition, the reaction temperature was raised to 120°C, followed by reaction for 30 minutes. After the completion of reaction, unreacted materials were removed by degassing under reduced pressure to obtain Polyoxyalkylene-Based Polymer C3 having a fluorosilyl group at a terminal (hereinafter, referred to as Fluorinated Polymer C3). The 1H-NMR spectrum of Fluorinated Polymer C3 was measured (measured in a CDCl₃ solvent by using NMR400 manufactured by Shimadzu Corporation), as a result, while the peak (m, 0.63 ppm) corresponding to silylmethylene (-CH₂-Si) of Polymer A5 as the raw material disappeared, a broad peak appeared on the low magnetic field side (0.7 ppm or more).

### (Example 1)

In a 300-mL flask equipped with a stirrer, a thermometer, a nitrogen introduction port, a monomer charging tube and a water-cooled condenser, Polyoxyalkylene-Based Polymer A3 obtained in Synthesis Example 4 was added in the blending ratio shown in Table 3 and dehydrated by heating (100°C), degassing and stirring for 2 hours. After cooling, Fluorinated Polymer C1-1 obtained in Synthesis Example 1, Photobase Generator B1 and KBM-1003 [produced by Shin-Etsu Chemical Co., Ltd., vinyltrimethoxysilane] as a moisture absorber were added and mixed with stirring to prepare a photocurable composition.

**Table 3**

| | Example 1 | Example 2 | Example 3 | Example 4 | Example 5 | Comparative Example 1 |
|---|---|---|---|---|---|---|
| (A) Polyoxyalkylene-Based Polymer A3 | 100 | 100 | - | - | 100 | 100 |
| (A) Acrylic Polymer A4 | - | - | 87.5 | 87.5 | - | - |
| (A) Acrylic Polymer A2 | - | - | 12.5 | 12.5 | - | - |
| (B) Photobase Generator B1 | 25 (5) | 25 (5) | 25 (5) | - | 25 (5) | 25 (5) |
| (B) Photobase Generator B2 | - | - | - | 16.7(5) | - | - |
| (C1) Fluorinated Polymer C1-1 | 1 | 10 | 10 | 10 | - | - |
| (C1) Fluorinated Compound C 1-2 | | - | - | - | 0.20 | - |
| KBM-1003 | 2 | 2 | 2 | 2 | 2 | 2 |

In Table 3, the blending amount of each compounding substance is expressed in g, the numerical value in the parenthesis is a solid content, Polyoxyalkylene-Based Polymer A3 is Polyoxyalkylene-Based Polymer A3 obtained in Synthesis Example 4, Acrylic Polymer A4 is Acrylic Polymer A4 obtained in Synthesis Example 5, Acrylic Polymer A2 is Acrylic Polymer A2 obtained in Synthesis Example 2, Fluorinated Polymer C1-1 is Fluorinated Polymer C1-1 obtained in Synthesis Example 1, Fluorinated Compound C1-2 is Fluorinated Compound C1-2 obtained in Synthesis Example 3, and details of other compounding substances are as follows.
Photobase Generator B1: a mixture of 20 mass% of PBG-SA1 [trade name, produced by San-Apro Ltd., photolatent tertiary amine capable of generating DBU by light, 8-(9-oxo-9H-thioxanthen-2-yl)methyl-1,8-diazabicyclo[5.4.0]-7-undecenium tetraphenylborate] and 80 mass% of propylene carbonate
Photobase Generator B2: a mixture of 30 mass% of WPBG-082 [trade name, produced by Wako Pure Chemical Industries Ltd., photolatent amine capable of generating guanidine by light, guanidine 2-(3-benzoylphenyl)propionate] and 70 mass% of N-methylpyrrolidone
KBM-1003: trade name, produced by Shin-Etsu Chemical Co., Ltd., vinyltrimethoxysilane

The obtained photocurable composition was subjected to a curability test and an adhesiveness test by the following methods. The results obtained are shown in Tables 4 and 5.

### 1) Curability Test

The photocurable composition was applied onto a metal plate to a thickness of about 50 µm and after UV irradiation [irradiation conditions: metal halide lamp (level of illumination: 50 mW/cm²), cumulative light quantity: 2,000 mJ/cm²] or without UV irradiation, left standing for the given time shown in Table 2 under the conditions of an illuminance of 550 lux (fluorescent lamp), 23°C and 50% RH and thereafter, the state of curing was confirmed by finger-touching of the photocurable composition surface.

A: Cured, B: gelled (intermediate between liquid and solid), and C: uncured.

### 2) Adhesiveness Test

The photocurable composition was applied onto a stainless steel plate (25 mm×100 mm×1.5 mm) to a thickness of about 50 µm and subjected to UV irradiation [irradiation conditions: metal halide lamp (level of illumination: 50 mW/cm²), cumulative light quantity: 200 mJ/cm²].

Immediately after UV irradiation, the stainless steel plate was overlapped on the central part of a stainless steel plate having the same size to crisscross each other and laminated together. After standing for 24 hours under the conditions of 23°C and 50% RH, whether the plate is moved or not by hand was judged. The adhesiveness was rated A when not moved, and rated C when moved.

**Table 4**

| Curability Test | | | | | | |
|---|---|---|---|---|---|---|
| | Example 1 | Example 2 | Example 3 | Example 4 | Example 5 | Comparative Example 1 |
| UV Irradiation, after 5 minutes | C | B | C | C | C | C |
| UV Irradiation, after 10 minutes | A | A | C | C | A | C |
| UV Irradiation, after 30 minutes | A | A | C | C | - | C |
| UV Irradiation, after 1.5 hours | - | - | B | C | - | C |
| UV Irradiation, after 3 hours | - | - | A | B | - | C |
| UV Irradiation, after 5 hours | - | - | - | A | - | C |
| No UV irradiation, after 5 minutes | C | C | C | C | C | C |
| No UV irradiation, after 3 hours | C | C | C | C | C | C |

**Table 5**

| Adhesiveness Test | | | | | | |
|---|---|---|---|---|---|---|
| | Example 1 | Example 2 | Example 3 | Example 4 | Example 5 | Comparative Example 1 |
| Evaluation | A | A | A | A | A | C |

### (Examples 2 to 5)

Photocurable compositions were prepared by the same method as in Example 1 except for changing the compounding substances as shown in Table 3. A curability test and an adhesiveness test of the photocurable composition were performed by the same methods as in Example 1, and the results obtained are shown in Tables 4 and 5.

### (Comparative Example 1)

A photocurable composition was prepared by the same method as in Example 1 except for changing the compounding substances as shown in Table 3. A curability test and an adhesiveness test of the photocurable composition were performed by the same methods as in Example 1, and the results obtained are shown in Tables 4 and 5.

### (Examples 6 to 11)

Photocurable compositions were prepared by the same method as in Example 1 except for changing the compounding substances as shown in Table 6. A surface curability test of the photocurable composition was performed by the following method, and the results obtained are shown in Table 6.

### Surface Curability Test:

The photocurable composition was poured in a round container having a size of 20 mm in diameter to a thickness of 7 mm and after no UV irradiation or UV irradiation [irradiation conditions: metal halide lamp (level of illumination: 330 mW/cm²), cumulative light quantity: 3,000 mJ/cm²], the time until the surface became non-tacky (tack-free time) was measured under an environment of 23°C and RH 50% in a dark room by finger-touching every 30 seconds.

**Table 6**

| | Example 6 | Example 7 | Example 8 | Example 9 | Example 10 | Example 11 |
|---|---|---|---|---|---|---|
| (A) Polyoxyalkylene-Based Polymer A3 | 100 | 100 | 100 | 100 | 100 | 100 |
| (B) Photobase Generator B3 | 10(5) | 10(5) | - | - | - | - |
| (B) Photobase Generator B4 | - | - | 10(5) | 10(5) | - | - |
| (B) Photobase Generator B5 | - | - | - | - | 10(5) | 10(5) |
| Darocur 1173 | - | 2.5 | - | 2.5 | - | 2.5 |
| (C1) Fluorinated Polymer C1-3 | 15 | 15 | 5 | 5 | 5 | 5 |
| Surface curability, after UV irradiation | 24 min | 11 min | 7 min | 5 min | 7 min | 5 min |
| Surface curability, after no UV irradiation | 1 day or more | 1 day or more | 1 day or more | 1 day or more | 1 day or more | 1 day or more |

In Table 6, the blending amount of each compounding substance is expressed in g, the numerical value in the parenthesis is a solid content, Polyoxyalkylene-Based Polymer A3 is Polyoxyalkylene-Based Polymer A3 obtained in Synthesis Example 4, Fluorinated Polymer C1-3 is Fluorinated Polymer C1-3 obtained in Synthesis Example 7, and details of other compounding substances are as follows.
Photobase Generator B3: a propylene carbonate solution containing 50 mass% of Irgacure (registered trademark) 907 (produced by BASF, 2-methyl-1-(4-methylthiophenyl)-2-morpholinopropan-1-one)
Photobase Generator B4: a DMSO solution containing 50 mass% of Irgacure (registered trademark) 369 (produced by BASF, 2-benzyl-2-dimethylamino-1-(4-morpholinophenyl)-butanone-1)
Photobase Generator B5: a mixture of 50 mass% of Irgacure (registered trademark) 379EG [trade name, produced by BASF, 2-(dimethylamino)-2-[(4-methylphenyl)methyl]-1-[4-(4-morpholinyl)phenyl]-1-butanone] and 50 mass% of propylene carbonate
Darocur 1173: trade name, produced by BASF, cleavage-type photoradical generator, 2-hydroxy-2-methyl-1-phenyl-propan-1-one

### (Examples 12 to 20 and Comparative Example 2)

In a 300-mL flask equipped with a stirrer, a thermometer, a nitrogen introduction port, a monomer charging tube and a water-cooled condenser, respective compounding substances were added in the blending ratio shown in Tables 7 and 8 and mixed/stirred to prepare photocurable compositions.

**Table 7**

| | Example 12 | Example 13 | Comparative Example 2 |
|---|---|---|---|
| (A) Polyoxyalkylene-Based Polymer A3 | 100 | 100 | 100 |
| (B) Photobase Generator B1 | 25 (5) | - | - |
| (B) Photobase Generator B5 | - | 10 (5) | - |
| (C2) Fluorine-Based Compound C2 | 1 (0.1) | 1 (0.1) | 1 (0.1) |
| KBM-1003 | 2 | - | 2 |

**Table 8**

| | Example 14 | Example 15 | Example 16 | Example 17 | Example 18 | Example 19 | Example 20 |
|---|---|---|---|---|---|---|---|
| (A) Polyoxyalkylene-Based Polymer A3 | 100 | 100 | 100 | 100 | 100 | 100 | 100 |
| (B) Photobase Generator B5 | 10 (5) | 10 (5) | 10 (5) | 10 (5) | 10 (5) | 10 (5) | 10 (5) |
| (C1) Fluorinated Polymer C1-3 | - | - | - | - | - | - | 5 |
| (C2) Fluorine-Based Compound C2 | 0.4 (0.04) | 1 (0.1) | 2 (0.2) | 3 (0.3) | 5 (0.5) | 10 (1) | 0.5 (0.05) |
| KBM-1003 | - | - | 2 | 2 | 2 | 10 | 2 |
| Darocur 1173 | 2.5 | 2.5 | 2.5 | 2.5 | 2.5 | 2.5 | 2.5 |

In Tables 7 and 8, the blending amount of each compounding substance is expressed in g, the numerical value in the parenthesis is a solid content, Polyoxyalkylene-Based Polymer A3 is Polyoxyalkylene-Based Polymer A3 obtained in Synthesis Example 4, Fluorinated Polymer C1-3 is Fluorinated Polymer C1-3 obtained in Synthesis Example 7, and details of other compounding substances are as follows.
Photobase Generator B1: a mixture of 20 mass% of PBG-SA1 [trade name, produced by San-Apro Ltd., photolatent tertiary amine capable of generating DBU by light, 8-(9-oxo-9H-thioxanthen-2-yl)methyl-1,8-diazabicyclo[5.4.0]-7-undecenium tetraphenylborate] and 80 mass% of propylene carbonate
Photobase Generator B5: a mixture of 50 mass% of Irgacure (registered trademark) 379EG [trade name, produced by BASF, 2-(dimethylamino)-2-[(4-methylphenyl)methyl]-1-[4-(4-morpholinyl)phenyl]-1-butanone] and 50 mass% of propylene carbonate
Fluorine-Based Compound C2: a mixture of 10 mass% of borontrifluoride monoethylamine and 90 mass% of propylene carbonate
KBM-1003: trade name, produced by Shin-Etsu Chemical Co., Ltd., vinyltrimethoxysilane
Darocur 1173: trade name, produced by BASF, cleavage-type photoradical generator, 2-hydroxy-2-methyl-1-phenyl-propan-1-one

The obtained photocurable compositions of Examples 12 and 13 and Comparative Example 2 were subjected to a surface curability test (a) by the following method. The results obtained are shown in Table 9.
(a) The photocurable composition was poured in a cylindrical container of 20 mm in diameter and 7 mm in height to a thickness of 7 mm and immediately after no UV irradiation or UV irradiation [irradiation conditions: metal halide lamp (level of illumination: 330 mW/cm²), cumulative light quantity: 3,000 mJ/cm²], left standing for the given time shown in Table 10 under an environment of 23°C and RH 50% in a dark room, and the state of curing was confirmed by finger-touching of the photocurable composition surface.
A: Cured, B: gelled (intermediate between liquid and solid), and C: uncured.

**Table 9**

| Surface Curability Test (a): | | | |
|---|---|---|---|
| | Example 12 | Example 13 | Comparative Example 2 |
| UV Irradiation, after 5 minutes | A | C | C |
| UV Irradiation, after 10 minutes | - | B | C |
| UV Irradiation, after 30 minutes | - | A | C |
| UV Irradiation, after 1.5 hours | - | - | C |
| UV Irradiation, after 3 hours | - | - | C |
| No UV irradiation, after 5 minutes | C | C | C |
| No UV irradiation, after 3 hours | C | C | C |

In addition, the obtained photocurable compositions of Examples 12 to 20 and Comparative Example 2 were subjected to a surface curability test (b) by the following method. The results obtained are shown in Table 10.
(b) The photocurable composition was poured in a cylindrical container of 20 mm in diameter and 7 mm in height to a thickness of 7 mm and immediately after no UV irradiation or UV irradiation [irradiation conditions: metal halide lamp (level of illumination: 1,500 mW/cm²), cumulative light quantity: 3,000 mJ/cm²], the time until the surface became non-tacky (tack-free time) was measured under an environment of 23°C and RH 50% in a dark room by finger-touching every 1 minute until 10 minutes later, every 10 minutes in the period from 10 minutes to 120 minutes, and every 1 hour in the period from 120 minutes to 8 hours. In addition, the surface curability was rated A when the tack-free time after UV irradiation is less than 1 hour, rated B when from 2 hours to less than 3 hours, and rated C when 3 hours or more; and at the time of no UV irradiation, rated A when the tack-free time is 8 hours or more, rated B when from 4 hours to less than 8 hours, and rated C when less than 4 hours.

**Table 10**

| | | | | | | | | | | |
|---|---|---|---|---|---|---|---|---|---|---|
| Surface Curability Test (b): | | | | | | | | | | |

| | Example | | | | | | | | | Comparative Example 2 |
|---|---|---|---|---|---|---|---|---|---|---|
| | 12 | 13 | 14 | 15 | 16 | 17 | 18 | 19 | 20 | |
| After UV irradiation | Within 1 min | 30 min | 100 min | 20 min | 5 min | 4 min | Within 1 min | 4 min | Within 1 min | 8 hours or more |
| Judgment | A | A | B | A | A | A | A | A | A | C |
| After no UV irradiation | 8 hours or more | 8 hours or more | 8 hours or more | 8 hours or more | 8 hours or more | 8 hours or more | 5 hours | 5 hours | 8 hours or more | 8 hours or more |
| Judgment | A | A | A | A | A | A | B | B | A | A |

As shown in Tables 4 to 10, the photocurable composition of the present invention was a photocurable composition that is not cured when irradiated with no active energy ray but is cured by the irradiation with an active energy ray, and thus was excellent in the workability and at the same time, curable in a short time even with a low, cumulative light quantity. In addition, the photocurable composition of the present invention exerted excellent adhesion performance even with a low cumulative light quantity. Furthermore, depending on the irradiation conditions of an active energy ray, the photocurable composition was not cured immediately after the irradiation with an active energy ray and could be cured after passing a fixed time.

## Claims

1. A photocurable composition comprising:
(A) a crosslinkable silicon group-containing organic polymer;
(B) a photobase generator; and
(C1) a silicon compound having an Si-F bond and/or (C2) one or more fluorine-based compounds selected from the group consisting of boron trifluoride, a boron trifluoride complex, a fluorinating agent, and an alkali metal salt of a polyfluoro compound.

2. The photocurable composition as claimed in claim 1, wherein the (B) photobase generator is a photolatent tertiary amine.

3. The photocurable composition as claimed in claim 1 or 2, further comprising (D) a silane coupling agent.

4. The photocurable composition as claimed in any one of claims 1 to 3, wherein the (A) crosslinkable silicon group-containing organic compound is one or more members selected from the group consisting of a polyoxyalkylene-based polymer containing, on average, 0.8 or more crosslinkable silicon groups per molecule, a saturated hydrocarbon-based polymer containing, on average, 0.8 or more crosslinkable silicon groups per molecule, and a (meth)acrylic acid ester-based polymer containing, on average, 0.8 or more crosslinkable silicon groups per molecule.

5. A method for producing a cured product, comprising irradiating a photocurable composition claimed in any one of claims 1 to 4 with light to form a cured product.

6. A cured product formed by a method claimed in claim 5.

7. A method for producing a product, comprising producing a product by using a photocurable composition claimed in any one of claims 1 to 4.

8. A product produced by a method claimed in claim 7.

9. A product produced using a method claimed in claim 5.

10. A product using, as an adhesive, a photocurable composition claimed in any one of claims 1 to 4.

11. A product using, as a coating agent, a photocurable composition claimed in any one of claims 1 to 4.
